# EUROPEAN PATENT APPLICATION

(11) **EP 4 742 769 A1**
(43) Date of publication of application: **13.05.2026**
(21) Application number: 23944567.9
(22) Date of filing: 07.07.2023
(51) Int. Cl.: H04W 52/02

(54) **FREQUENCY ERROR MEASUREMENT METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: Novagraaf Technologies
(86) International application number: PCT/CN2023/106387
(87) International publication number: WO 2025/010544

(57) **Abstract**

The present application relates to the field of zero power consumption, and discloses a frequency error measurement method and apparatus, a device, a medium, and a program product. The method is executed by a first device. The method comprises: transmitting a first signal, the first signal being used for a second device to measure a frequency error of the first device, and the first device being a zero-power-consumption device. According to the method, the first signal for the second device to measure the frequency error of the zero-power-consumption device is transmitted, so that the frequency error between an actual transmission frequency of the first signal and an expected transmission frequency is measured, and the frequency error can be used for helping to adjust the zero-power-consumption device, thereby ensuring the accuracy of the frequency of the zero-power-consumption device.

## Description

### TECHNICAL FIELD

Embodiments of the present disclosure relate to the zero-power field, and particularly relate to a method and apparatus for measuring frequency errors, and a device, a medium and a program product thereof.

### RELATED ART

With the continuous evolvement of wireless communication technologies, the Internet of things (IoT) technology is applied to all aspects of production and life such as smart homes, smart cities, smart factories, remote monitoring, and intelligent transportation.

Due to the requirements on the power consumption, size, and the like of IoT in different scenarios, a zero-power IoT, which has ultra-low power consumption and an ultra-small size and is battery-free, has emerged.

### SUMMARY

The present disclosure provides a method and apparatus for measuring frequency errors, and a device, a medium and a program product thereof. The technical solutions at least include the following contents.

According to an aspect of the embodiments of the present disclosure, a method for measuring frequency errors is provided. The method is performed by a first device, and the method includes: transmitting a first signal, wherein the first signal is used for a second device to measure a frequency error of the first device; wherein the first device is a zero-power device.

According to another aspect of the embodiments of the present disclosure, a method for measuring frequency errors is provided. The method is performed by a second device, and the method includes: receiving a first signal, wherein the first signal is used for the second device to measure a frequency error of a first device; wherein the first device is a zero-power device.

According to another aspect of the embodiments of the present disclosure, an apparatus for measuring frequency errors is provided. The apparatus includes: a transmitting module, configured to transmit a first signal, wherein the first signal is used for a second device to measure a frequency error of the first device; wherein the first device is a zero-power device.

According to another aspect of the embodiments of the present disclosure, an apparatus for measuring frequency errors is provided. The apparatus includes: a receiving module, configured to receive a first signal, wherein the first signal is used for a second device to measure a frequency error of a first device; wherein the first device is a zero-power device.

According to another aspect of the embodiments of the present disclosure, a first device is provided. The first device includes: a processor; a transceiver communicably connected to the processor; and a memory configured to store at least one instruction executable by the processor; wherein the processor is configured to load and run the at least one instruction to perform the methods for measuring frequency errors as described above.

According to another aspect of the embodiments of the present disclosure, a second device is provided. The second device includes: a processor; a transceiver communicably connected to the processor; and a memory configured to store at least one instruction executable by the processor; wherein the processor is configured to load and run the at least one instruction to perform the methods for measuring frequency errors as described above.

According to another aspect of the embodiments of the present disclosure, a computer-readable storage medium is provided. The computer-readable storage medium stores at least one program, wherein the at least one program is loaded and run by a processor to perform the methods for measuring frequency errors as described above.

According to another aspect of the embodiments of the present disclosure, a computer program product or a computer program is provided. The computer program product or computer program includes at least one computer instruction stored in a computer-readable storage medium, wherein the at least one computer instruction, when loaded and run by a processor, causes the processor to perform the methods for measuring frequency errors as described above.

The technical solutions according to the embodiments of the present disclosure at least have the following beneficial effects.

By transmitting the first signal used for the second device to measure the frequency error of a zero-power device, a difference between an actual transmit frequency and an expected transmission of the first signal is measured and taken as the frequency error. The frequency error is used for adjusting the zero-power device, thereby ensuring the frequency accuracy of the zero-power device.

### BRIEF DESCRIPTION OF DRAWINGS

For clearer descriptions of the technical solutions according to the embodiments of the present disclosure, the accompanying drawings required for describing the embodiments are briefly introduced hereinafter. Apparently, the accompanying drawings in the following description illustrate merely some embodiments of the present disclosure, and those of ordinary skill in the art may still derive other drawings from these accompanying drawings without creative efforts.
FIG. 1 illustrates a schematic diagram of a zero-power communication system according to some embodiments of the present disclosure;
FIG. 2 illustrates a schematic diagram of radio frequency (RF) power harvesting in related art;
FIG. 3 illustrates a schematic diagram of a backscattering communication process in related art;
FIG. 4 illustrates a schematic diagram of resistive load modulation in related art;
FIG. 5 illustrates a schematic diagram of a coding scheme in related art;
FIG. 6 illustrates a schematic diagram of establishing an association between a terminal device and a network device in related art;
FIG. 7 illustrates a schematic diagram of a contention-based random access procedure in related art;
FIG. 8 illustrates a schematic diagram of a contention-free random access procedure in related art;
FIG. 9 illustrates a schematic diagram of a signal offset according to some embodiments of the present disclosure;
FIG. 10 illustrates a flowchart of a frequency calibration method according to some embodiments of the present disclosure;
FIG. 11 illustrates a flowchart of a method for measuring frequency errors according to some embodiments of the present disclosure;
FIG. 12 illustrates a schematic diagram of an available channel and a guard band according to some embodiments of the present disclosure;
FIG. 13 illustrates a flowchart of a method for measuring frequency errors according to some embodiments of the present disclosure;
FIG. 14 illustrates a schematic diagram of a frequency calibration reference signal and an association request position according to some embodiments of the present disclosure;
FIG. 15 illustrates a flowchart of a method for measuring frequency errors according to some embodiments of the present disclosure;
FIG. 16 illustrates a flowchart of a method for measuring frequency errors according to some embodiments of the present disclosure;
FIG. 17 illustrates a flowchart of a method for measuring frequency errors according to some embodiments of the present disclosure;
FIG. 18 illustrates a flowchart of a method for measuring frequency errors according to some embodiments of the present disclosure;
FIG. 19 illustrates a block diagram of an apparatus for measuring frequency errors according to some embodiments of the present disclosure;
FIG. 20 illustrates a block diagram of an apparatus for measuring frequency errors according to some embodiments of the present disclosure; and
FIG. 21 illustrates a schematic structural diagram of a first device or a second device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be noted that user information (including but not limited to user equipment information, user personal information, and the like) and data (including but not limited to data for analysis, stored data, displayed data, and the like) in the present disclosure are information and data authorized by the users or fully authorized by the parties. The collection, use, and processing of relevant data shall comply with the relevant laws, regulations, and standards of the relevant countries and regions.

It should be understood that although the terms "first," "second," and the like may be used herein to describe various pieces of information, such information should not be limited to these terms. These terms are only used to distinguish one type of information from another. For example, a first parameter may also be referred to as a second parameter, and similarly, a second parameter is also referred to as a first parameter, without departing from the scope of the present disclosure. The word "if," as used herein, may be interpreted as "in a case where," "in a case when," or "in response to determining that," depending on the context.

The technical solutions according to some embodiments of the present disclosure are applicable to various communication systems, such as a global system of mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, a cellular IoT system, a cellular passive IoT system, a future evolved system of a 5G NR system, or 6^{th} generation (6G) system and a future evolved system thereof.

It is understandable that, in the embodiments of the present disclosure, "5G" may also be referred to as "5G NR" or "NR".

It is understandable that, in the description of the embodiments of the present disclosure, the term "corresponding" may indicate a direct corresponding relationship or an indirect corresponding relationship between two items, or an association relationship between the two items, or a relationship such as indicating and being indicated, configuring and being configured, or the like.

In the embodiments of the present disclosure, the term "predefined" may be implemented by pre-storing a corresponding code, a corresponding table, or another method that may be used to indicate relevant information in a device (such as a terminal device or a network device), and a specific implementation thereof is not limited in the present disclosure. For example, the term "predefined" may be "defined" in a protocol.

In the embodiments of the present disclosure, the "protocol" may be a standard protocol in the field of communication, and for example, may include an LTE protocol, an NR protocol, and a related protocol applicable to a future communication system, which is not limited in the present disclosure.

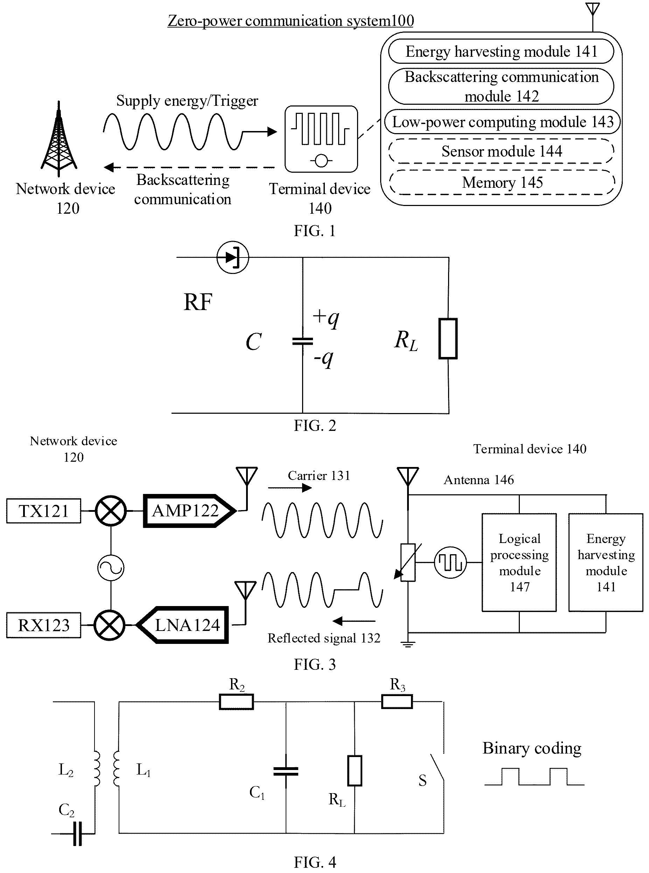

FIG. 1 illustrates a schematic diagram of a zero-power communication system 100 according to some embodiments of the present disclosure. The zero-power communication system 100 includes a first device and a second device. The second device includes at least one of a network device or a terminal device, and the second device is used for frequency calibration. The embodiments of the present disclosure are generally described by taking an example where the first device is a terminal device 140 and the second device is a network device 120. The terminal device 140 is a zero-power device or an ambient power enabled IoT (Ambient IoT) device.

The network device 120 is used to transmit a wireless energy supply signal and a downlink communication signal to the terminal device 140 and receive a backscattering signal from the terminal device 140. The terminal device 140 includes an energy harvesting module 141, a backscattering communication module 142, and a low-power computing module 143. The energy harvesting module 141 may harvest energy carried by radio waves in space for driving the low-power computing module 143 of the terminal device 140 and implement backscattering communication. Upon acquiring the energy, the terminal device 140 may receive control signaling from the network device 120 and transmit data to the network device 120 by backscattering based on the control signaling. The transmitted data may be from data stored in the terminal device 140 (e.g., identity or pre-written information, such as production date, brand, and manufacturer).

The terminal device 140 may further include a sensor module 144 and a memory 145. The sensor module 144 may include various sensors. The terminal device 140 may report, based on a zero-power mechanism, data collected by the various sensors. The memory 145 is used to store some basic information (such as item identifiers) or acquire sensing data, such as ambient temperature and ambient humidity.

The terminal device 140 does not need any battery, and simple signal demodulation, decoding or coding, modulation, and other simple operations may be implemented using the low-power computing module 143. Therefore, a zero-power module only requires a simple hardware design, thereby lowering the cost and reducing the size of a zero-power device.

The network device 120 includes, but is not limited to, a cellular network device such as a 5G/6G network device and a base station device, and a Wi-Fi/WLAN network device such as an access point (AP), a router, and a mobile AP. The mobile AP may be a phone.

The terminal device 140 includes, but is not limited to, a handheld device, a wearable device, an in-vehicle device, an IoT device, or the like. The terminal device 140 may be at least one of a phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, a controller, or the like.

**In the following, key technologies of zero-power communication are introduced.**

### •RF power harvesting

FIG. 2 is a schematic diagram of RF power harvesting in the related art. The RF power harvesting is to harvest, based on the principle of electromagnetic induction, spatial electromagnetic wave energy using an RF module by electromagnetic induction and connection to a capacitor C and a load resistor R_{L} that are connected in parallel to acquire energy required to drive the zero-power device to operate, for example, driving a low-power demodulation module, a modulation module, a sensor, and memory reading. Therefore, the zero-power terminal does not need any traditional battery.

### •Backscattering communication

FIG. 3 is a schematic diagram of a backscattering communication process in the related art. The terminal device 140, which acts as a zero-power device, receives a wireless signal carrier 131 from a transmit (TX) module 121 of the network device 120 by using a amplifier (AMP) 122, modulates the wireless signal carrier 131, loads to-be-transmitted information using a logic processing module 147, and harvests RF energy using the energy harvesting module 141. The terminal device 140 radiates a modulated reflected signal 132 using an antenna 146. This information transmission process is referred to as backscattering communication. A receive (RX) module 123 of the network device 120 receives the modulated reflected signal 132 using a low-noise amplifier (LNA) 124. Backscattering and load modulation functions are inseparable. Load modulation is a process of completing modulation by adjusting and controlling circuit parameters of an oscillation circuit of the terminal device140 based on rhythms of data streams to cause parameters such as impedance of electronic tags to change accordingly.

The load modulation technology mainly includes resistive load modulation and capacitive load modulation. FIG. 4 is a schematic diagram of resistive load modulation in the related art. In the resistive load modulation, the load resistor R_{L} is connected in parallel to a third resistor R₃, a switch S is turned on or turned off based on binary-coded control, turn-on or turn-off of the third resistor R₃ may cause a change of voltage on a circuit, the load resistor R_{L} is connected in parallel to a first capacitor C₁, the load resistor R_{L} is connected in series to a second resistor R₂, and the second resistor R₂ is connected in series to a first inductor L₁. The first inductor L₁ is coupled to a second inductor L₂, and the second inductor L₂ is connected in series to a second capacitor C₂. In this way, amplitude shift keying (ASK) may be implemented. That is, signal modulation and signal transmission are implemented by adjusting an amplitude of the backscattering signal from the zero-power terminal. Similarly, in the capacitive load modulation, a resonant frequency of a circuit may be changed based on turn-on or turn-off of a capacitor, such that frequency shift keying (FSK) is implemented. That is, signal modulation and signal transmission are implemented by adjusting an operating frequency of the backscattering signal from the zero-power terminal.

The zero-power terminal carries out information modulation on an incoming signal by load modulation, such that the backscattering communication process is implemented. The zero-power terminal has the following significant advantages: the terminal does not actively transmit any signal, and no complex RF link, such as a power amplifier (PA) and an RF filter in the RF link, is required; the terminal is not required to actively generate any high-frequency signal, and thus a high-frequency crystal oscillator is not required; and the terminal carries out signal transmission by backscattering communication, without consuming energy of the terminal.

### •Ultra-low-power active transmission technique

A zero-power device may also adopt an ultra-low-power active transmission technique. Different from the backscattering transmission, when transmitting data using the ultra-low-power active transmission technique, the zero-power device needs to use a relatively simple and low-power oscillator to generate RF carriers, and then modulates to-be-transmitted information onto the RF carriers. Based on current research, the power consumption of an ultra-low-power active transmitter may be as low as several hundred microwatts, and thus the ultra-low-power active transmitter can achieve ultra-low-power data transmission.

**A coding scheme of zero-power communication is introduced hereinafter.**

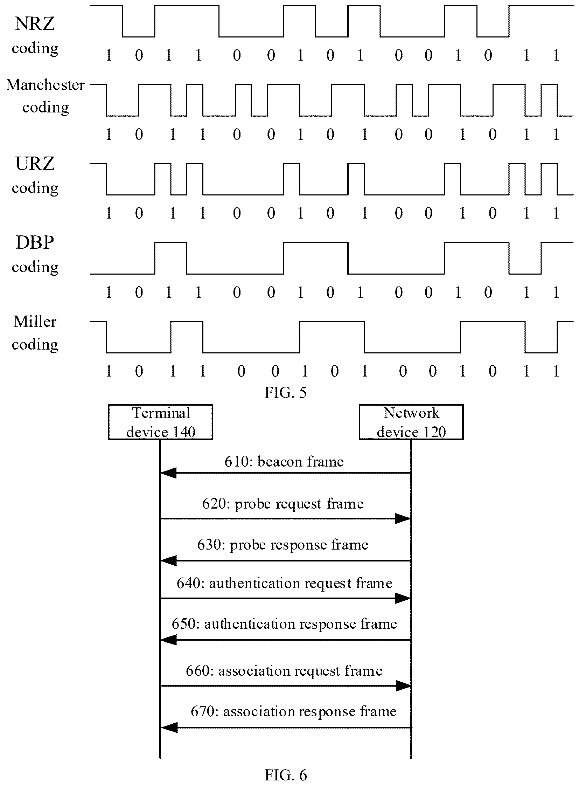

FIG. 5 is a schematic diagram of a coding scheme in the related art. For data transmitted by electronic tags, binary "1" and binary "0" may be represented using different forms of codes. A radio frequency identification (RFID) system generally adopts one of: non-return-to-zero (NRZ) coding, Manchester coding, unipolar return-to-zero (URZ) coding, differential binary phase (DBP) coding, Miller coding, or differential coding. That is, 0 and 1 may be represented using different pulse signals.
- In NRZ coding, binary "1" is represented by a high level, and binary "0" is represented by a low level. NRZ coding in FIG. 5 is a schematic diagram of levels of binary data 101100101001011 encoded by NRZ coding.
- Manchester coding is also referred to as split-phase coding. In Manchester coding, a binary value is represented by a change (rise or fall) in a level in a half bit cycle within a bit length. A negative transition in a half bit cycle represents binary "1", and a positive transition in a half bit cycle represents binary "0". An error in data transmission means that when data bits transmitted by a plurality of electronic tags at the same time have different values, received rising and falling edges offset each other, resulting in an uninterrupted carrier signal throughout the entire bit length. In Manchester coding, it is impossible that a state without a change is present within the bit length. A reader/writer may determine, using the error, a specific location where a collision occurs. Manchester coding helps detect data transmission errors, and the Manchester coding is generally used for data transmission from the electronic tags to the reader/writer when load modulation or backscattering modulation of carriers is adopted. Manchester coding in FIG. 5 is a schematic diagram of levels of binary data 101100101001011 encoded by Manchester coding.
- In URZ coding, binary "1" is represented by a high level in a first half bit cycle of URZ coding, and binary "1" is represented by a low-level signal that lasts for an entire bit cycle. URZ coding in FIG. 5 is a schematic diagram of levels of binary data 101100101001011 encoded by URZ coding.
- In DBP coding, binary "0" is represented by any edge in a half bit cycle, and binary "1" is represented by no edge. In addition, levels are inverted at the beginning of each bit cycle. It is relatively easy for the receiver to reconstruct a bit beat. DBP coding in FIG. 5 is a schematic diagram of levels of binary data 101100101001011 encoded by DBP coding.
- In Miller coding, binary "1" is represented by any edge in a half bit cycle, and binary "0" is represented by a constant level in a next bit cycle. Level alternation occurs at the beginning of a bit cycle. It is relatively easy for the receiver to reconstruct a bit beat. Miller coding in FIG. 5 is a schematic diagram of levels of binary data 101100101001011 encoded by Miller coding.
- In differential coding, each binary "1" to be transmitted may cause a change in signal level, while for binary "0", the signal level remains the same.

**Classifications of zero-power devices are introduced hereinafter.**

Based on energy sources and usage modes of the zero-power devices, the zero-power devices may be classified into the following types.

### •Passive zero-power device

The zero-power device does not need a built-in battery. In a case where the zero-power device is close to a network device, the zero-power device is within a near field range formed by antenna radiation of the network device. In some embodiments, the network device is a reader/writer of the RFID system. Therefore, an antenna of the zero-power device generates an induced current by electromagnetic induction, and the induced current drives a low-power chip circuit of the zero-power device. Demodulation of a forward link signal and modulation of a backward link signal are implemented. For a backscattering link, the zero-power device carries out signal transmission by backscattering or ultra-low-power active transmission. The passive zero-power device does not need a built-in battery to drive either for the forward link or a reverse link, and is a true zero-power device. The passive zero-power device does not need any battery, in which an RF circuit and a baseband circuit are very simple. For example, the passive zero-power device does not need devices such as an LNA, a PA, a crystal oscillator, and an analog-to-digital converter (ADC), and has many advantages such as small size, light weight, very low price, and long service life.

### •Semi-passive zero-power device

The semi-passive zero-power device is not provided with any conventional battery, and may harvest radio wave energy by an RF energy harvesting module, and at the same time, store the harvested energy in an energy storage unit. In some embodiments, the energy storage unit is a capacitor. Upon acquiring the energy, the energy storage unit may drive a low-power chip circuit of the zero-power device. Demodulation of a forward link signal and modulation of a backward link signal are implemented. For a backscattering link, the zero-power device carries out signal transmission by backscattering or ultra-low-power active transmission.

The semi-passive zero-power device does not need any built-in battery to drive either for the forward link or a reverse link, and in operation, uses energy stored in the capacitor that is from radio energy harvested by the RF energy harvesting module, which is a true zero-power device. The semi-passive zero-power device inherits many advantages of the passive zero-power device, such as small size, light weight, very low price, and long service life.

### •Active zero-power device

The zero-power device used in some scenarios is an active zero-power device. The active zero-power device may be provided with a built-in battery. The battery is configured to drive a low-power chip circuit of the zero-power device. Demodulation of a forward link signal and modulation of a backward link signal are implemented. However, for a backscattering link, the zero-power device carries out signal transmission by backscattering or ultra-low-power active transmission. Therefore, zero power of the active zero-power device is mainly reflected in the fact that signal transmission in the reverse link does not consume the power of the zero-power device itself but uses backscattering. In the active zero-power device, the built-in battery supplies power to an RFID chip, and thus a reading/writing distance of a tag is increased and reliability of communication is improved. Therefore, the active zero-power device is applicable to some scenarios where relatively high requirements are put forward for a communication distance and a read latency.

**Classifications of zero-power devices are introduced below based on the type of the transmitter.**

### (1) Zero-power device based on backscattering

Such a zero-power device carries out uplink data transmission by backscattering as described above. Such a zero-power device does not have an active transmitter for active transmission but only has a transmitter for backscattering. Therefore, when carrying out uplink data transmission, such a zero-power device needs a network device to provide carriers, and implement backscattering based on the carriers to implement uplink data transmission.

### (2) Zero-power device based on an active transmitter

Such a zero-power device has an active transmitter with an active transmission capability for active transmission, and when carrying out uplink data transmission, such a zero-power device can transmit data using its own active transmitter, and does not need a network device to provide carriers. An active transmitter applicable to a zero-power device may be an ultra-low-power ASK transmitter, an ultra-low-power FSK transmitter, or the like. Based on current implementations, the overall power consumption of such transmitters can be reduced to 400 microwatts to 600 microwatts in a case where a 100-microwatt signal is transmitted.

### (3) Zero-power device based on both backscattering and an active transmitter

Such a zero-power device supports both reverse scattering and an active transmitter. The zero-power device determines whether to perform backscattering or perform active transmission using an active transmitter based on different situations (such as different power levels and different available environment energy sources) or based on the scheduling of a network device.

**A cellular IoT is introduced below.**

The cellular IoT is booming. For example, IoT technologies, such as narrow band-IoT (NB-IoT), machine-type communications (MTC) and RedCap, have been standardized in the 3^{rd} Generation Partnership Project (3GPP). However, the IoT communication needs cannot be met yet in many scenarios.

### •Strict communication environment

In some IoT scenarios, extreme environment such as high temperature, extremely low temperature, high humidity, high voltage, high radiation, or high-speed movement may occur. Such scenarios include ultra-high voltage transformer substations, high-speed train track monitoring, environmental monitoring in extremely cold regions, industrial production lines, and the like. In these scenarios, existing IoT terminal devices cannot operate due to the operating environment restrictions of conventional power supplies. In addition, extreme operating environment are not conducive to the maintenance of IoT terminal devices, e.g., battery replacement.

### •Needs for ultra-small size of terminals

In some IoT scenarios, such as food traceability, commodity circulation, and smart wearables, a terminal needs to have an ultra-small size for convenient use in these scenarios. For example, an IoT terminal device used for commodity management in a circulation process is usually in the form of an electronic tag, and the IoT terminal device is embedded in commodity packaging in a very compact form. For another example, a lightweight wearable IoT terminal device improve user experience while meeting user needs.

### •Needs for ultra-low-cost IoT communication

In numerous IoT communication scenarios, an IoT terminal devices needs to have sufficiently low cost so as to enhance its competitiveness relative to other alternative techniques. For example, in logistics or warehousing scenarios, to facilitate the management of a large volume of items in circulation, an IoT terminal device is attached to each item, thereby achieving precise management of the entire logistics process and lifecycle by means of the communication between the IoT terminal device and a logistics network. In these scenarios, the IoT terminal device needs to have a very competitive price.

Therefore, to meet these IoT communication needs that have not been met yet, an IoT that has ultra-low cost and an ultra-small size and is battery-free/maintenance-free needs to be developed in the cellular IoT, and the zero-power IoT can perfectly meet these needs.

A zero-power IoT is also referred to as an ambient IoT or a passive IoT. The ambient IoT device uses various environmental energies such as RF energy, optical energy, solar energy, thermal energy, and mechanical energy to drive the ambient IoT device itself. The ambient IoT device may have no energy storage capability or only have a very limited energy storage capability (e.g., using a capacitor with a capacity of tens of microfarads). Compared with a traditional IoT device, the ambient IoT device has many advantages, for example, the ambient IoT is conventional battery-free, maintenance-free, small in size, low in complexity, low in cost, and has a long service life.

A zero-power IoT is at least applicable to the following four scenarios.
(1) Object identification, such as logistics management, management of production line products, and supply chain management.
(2) Environmental monitoring, such as monitoring of temperature, humidity, and harmful gases in operating environment and natural environment.
(3) Positioning, such as indoor positioning, intelligent object tracking, and positioning of production line items.
(4) Intelligent control, such as intelligent control of various appliances in smart homes (turning on/off air conditioners and adjusting temperature) and intelligent control of various facilities in agricultural greenhouses (automatic irrigation and fertilization).

**The following introduces the process of establishing an association between a terminal device and a network device in a Wi-Fi system.**

FIG. 6 illustrates a schematic diagram of establishing an association between a terminal device and a network device in the related art. The following processes are included.

**In process 610,** a terminal device 140 transmits a beacon frame.

The terminal device 140 passively monitors a periodically broadcast beacon frame, and upon monitoring a beacon frame, the terminal device may connect a wireless network over a subsequent management frame.

The beacon frame may carry capability information, a service set identifier (SSID), or other information.

**In process 620,** the terminal device 140 transmits a probe request frame to a network device 120.

The terminal device actively the probe request frame to the network device 120.

The probe request frame may carry capability information, an SSID, extended capability, or other information, and the probe request frame includes a directed probe request frame and a null probe request frame, wherein the directed probe request frame includes the SSID information, and the null probe request frame does not include the SSID information.

**In process 630,** the network device 120 transmits a probe response frame to the terminal device 140.

The terminal device 140 receives the probe response frame returned from the network device 120.

The probe response frame may carry capability information, an SSID, extended capability, or other information, and the probe response frame is used for responding to the probe request frame from the terminal device 140.

**In process 640,** the terminal device 140 transmits an authentication request frame to the network device 120.

The authentication request frame is used for the network device 120 to verify the identity of the terminal device 140.

**In process 650,** the network device 120 transmits an authentication response frame to the terminal device 140.

In response to receiving the authentication request frame, the network device 120 transmits an authentication response frame to reply the identity verification result of the terminal device 140.

**In process 660,** the terminal device 140 transmits an association request frame to the network device 120.

The terminal device 140 transmits the association request frame to the network device 120 to request to join a basic service set so as to establish an association with the network device.

**In process 670,** the network device 120 transmits an association response frame to the terminal device 140.

The network device 120 transmits the association response frame to the terminal device 140 to approve or reject the association request from the terminal device 140.

**The random access procedure in a cellular communication system is introduced below.**

The terminal device 140 supports at least one type of random access procedure, which is respectively a type-1 random access procedure and a type-2 random access procedure.

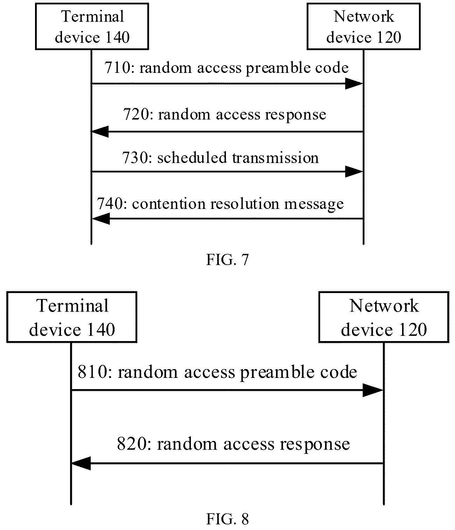

First, the type-1 random access procedure is a contention-based random access procedure. FIG. 7 illustrates a schematic diagram of a contention-based random access procedure in the related art. The method includes the following processes.

**In process 710,** the terminal device 140 transmits a message 1 (msg1), i.e., a random access preamble code, to the network device 120.

The terminal device 140 transmits a selected random access preamble code on a time-frequency resource of a selected physical random access channel (PRACH), and the network device 120 estimates, based on the random access preamble code, an uplink latency and a grant size required by the terminal device 140 to transmit a message 3 (msg3).

**In process 720,** the network device 120 transmits a message 2 (msg2), i.e., a random access response (RAR) to the terminal device 140.

Upon transmitting the message 1 (msg1), the terminal device 140 initiates a random access response window, and monitors a physical downlink control channel (PDCCH) within the random access response window. The PDCCH is a PDCCH scrambled by a random access radio network temporary identifier (RA-RNTI).

Upon successful monitoring of the PDCCH scrambled by the RA-RNTI, the terminal device 140 is capable of acquiring physical downlink shared channel (PDSCH) scheduled by the PDCCH, wherein the PDSCH contains an RAR.

The RAR contains: a backoff indicator (BI) indicating a backoff time for retransmitting the message 1; a random access preamble identifier (RAPID) indicating a random access preamble code; a time advance group (TAG), used for adjusting uplink timing; an uplink grant, used for scheduling an uplink resource indication of the message 3; and a temporary cell-radio network temporary identity (temporary C-RNTI), used for scrambling the PDCCH of a message 4 (initial access).

**In process 730,** the terminal device 140 transmits a message 3 (msg3), i.e., scheduled transmission (ST), to the network device 120.

The message 3 is mainly used for informing the network device 120 of an event that triggers the random access procedure. For example, in a case where the event is an initial random access procedure, the message 3 carries an identifier of the terminal device and an establishment cause. In a case where the event is radio resource control (RRC) reestablishment, the message 3 carries an identifier of a connected-state terminal device and an establishment cause.

**In process 740,** the network device 120 transmits a message 4 (msg4), i.e., a contention resolution message, to the terminal device 140.

The message 4 has two functions. First, the message 4 is used for contention conflict resolution. Second, the message 4 is a message used by the network device 120 to transmit a RRC configuration to the terminal device 140.

The contention conflict resolution refers to that the terminal device 140 receives the PDSCH of the message 4 and matches a common control channel signal distribution unit (CCCH SDU) in the PDSCH for scheduling. The PDSCH may be acquired in the following two ways.
1. The terminal device 140 carries a C-RNTI in the message 3, and in this case, the message 4 is scheduled using the PDCCH scrambled by the C-RNTI.
2. The terminal device 140 does not carry a C-RNTI in the message 3, for example, the current random access procedure is an initial access, and in this case, the message 4 is scheduled using the PDCCH scrambled by the temporary C-RNTI.

Second, the type-2 random access procedure is a contention-free random access procedure. FIG. 8 illustrates a schematic diagram of a contention-free random access procedure in the related art. The method includes the following processes.

**In process 810,** the terminal device 140 transmits a message A (msgA), i.e., a random access preamble code, to the network device 120.

The random access preamble code is allocated by broadcast, and the terminal device 140 transmits a selected random access preamble code on a time-frequency resource of a selected PRACH. The PRACH and the random access preamble code are designated by the network device 120, and the network device 120 estimates uplink latency based on the random access preamble code.

**In process 820,** the network device 120 transmits a message B (msgB), i.e., an RAR, to the terminal device 140.

Upon transmitting the message A (msgA), the terminal device 140 initiates a random access response window, and monitors a PDCCH within the random access response window. The PDCCH is a PDCCH scrambled by an RA-RNTI.

Upon successful monitoring of the PDCCH scrambled by the RA-RNTI, the terminal device 140 is capable of acquiring the PDSCH scheduled by the PDCCH, wherein the PDSCH contains an RAR.

The RAR contains: a BI indicating a backoff time for retransmitting the message A; a RAPID indicating a random access preamble code; and a TAG, used for adjusting uplink timing.

As can be seen from the above background, a zero-power device needs no battery, and the RF circuit and baseband circuit are extremely simple. However, extremely simple devices also bring technical challenges. For example, in order to reduce the power consumption, the zero-power device does not adopt a crystal oscillator as an oscillator but instead adopts a simpler oscillator, such as a resistor-capacitor (RC) oscillator and an inductor-capacitor (LC) oscillator. These oscillators are easy to implement and consume significantly less power than crystal oscillators, however these oscillators have poorer clock precision and frequency accuracy, for example, the frequency stability is 200 ppm (parts per million). When the zero-power device operates at 920 MHz, the frequency stability of 200 ppm corresponds to a frequency error of 184 kHz (900 MHz * 200 * 10⁻⁶ = 184 kHz). For another example, when the zero-power device operates at 2400 MHz, the frequency stability of 200 ppm corresponds to a frequency error of 480 kHz (2400 MHz * 200 * 10⁻⁶ = 480 kHz).

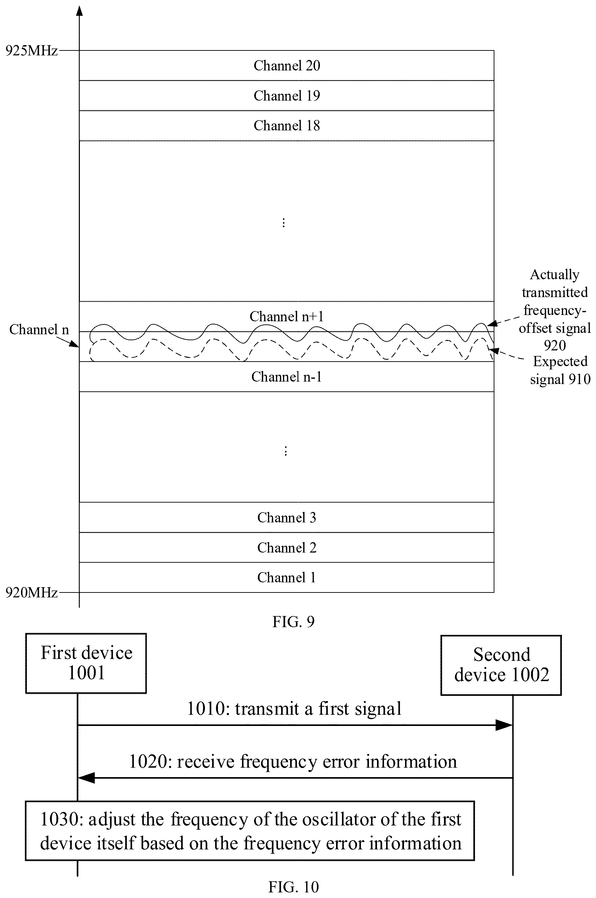

When the frequency error is large, the zero-power device deviates from its operating channel. For example, in a frequency band of 920 MHz to 925 MHz, based on the RFID frequency specifications in a relevant region, 20 channels are allocated within the 5 MHz frequency band, with the bandwidth of each channel being 250 kHz. Therefore, a 184 kHz frequency error of a zero-power device easily causes the zero-power device to deviate from its intended operating channel, resulting in signal reception errors or interference with other devices on adjacent channels. As illustrated in FIG. 9, an expected signal 910 should operate on channel n, but the actually transmitted frequency-offset signal 920 deviates to channel n+1, which easily results in signal reception errors and interference with other devices transmitting signals on channel n+1 as well.

To solve the frequency error of the zero-power device, the embodiments of the present disclosure provide a frequency calibration method. FIG. 10 illustrates a flowchart of a frequency calibration method according to some embodiments of the present disclosure. The method is performed by a first device 1001 and a second device 1002, and the method includes the following processes.

**In process 1010,** the first device 1001 transmits a first signal.

In some embodiments, the first device 1001 is a zero-power device or an ambient IoT. In some embodiments, the first device 1001 adopts a non-crystal oscillator or an oscillator with accuracy less than a threshold, for example, an RC oscillator or an LC oscillator.

In some embodiments, the first signal is a signal used for determining a frequency error, or the first signal is a signal used for the second device 1002 to measure a frequency error of a zero-power device. In some other embodiments, the first signal may also be referred to as an uplink signal, a first uplink signal, a reference signal, a first frequency reference signal, a frequency calibration reference signal, or the like, which is not limited in the embodiments of the present disclosure.

In some embodiments, the second device 1002 receives the first signal.

In some embodiments, the first signal is transmitted on a first channel determined by the first device. Alternatively, the first signal is expected to be transmitted on a first channel. Alternatively, the first signal is transmitted in a transmission manner corresponding to a first channel. Because the first device 1001 has a frequency error, the first signal actually cannot be accurately transmitted on the first channel.

In some embodiments, the frequency error is a difference between a first frequency and a second frequency. The first frequency is determined based on an actual transmit frequency of the first signal or an actual transmit frequency range of the first signal, and the second frequency is determined based on a reference point frequency or a channel frequency range of the first channel.

In some embodiments, the first frequency is an actual transmit frequency of the first signal, a frequency corresponding to an edge frequency point in the actual transmit frequency range, a frequency corresponding to a center frequency point in the actual transmit frequency range, or a frequency corresponding to another frequency point in the actual transmit frequency range.

In some embodiments, the second frequency is a channel frequency of the first channel, a frequency corresponding to an edge frequency point of the first channel, a frequency corresponding to a center frequency point of the first channel, or a frequency corresponding to another frequency point of the first channel.

As illustrated in FIG. 9, taking an example where the frequency calibration reference signal is an expected signal 910, the expected signal 910 is selected to be transmitted on channel n, and the frequency error is the difference between the actual transmit frequency of the expected signal 910 and the channel frequency of channel n.

For example, in a case where n is equal to 10, the channel frequency of channel 10 is 920 + 0.125 + 0.25 * 9 = 922.375 MHz, the center frequency point corresponding to the frequency calibration reference signal is 922.5 MHz, then the second device 1002 calculates that the frequency error is 922.5 MHz - 922.375 MHz = 0.125 MHz = 125 kHz.

**In process 1020,** the first device 1001 receives frequency error information.

In some embodiments, the second device 1002 transmits frequency error information. The frequency error information is used to indicate the frequency error, wherein the frequency error information is a numerical value or quantized value of the frequency error. The quantized value refers to dividing the possible numerical range of the frequency error into at least two numerical intervals, with each numerical interval corresponding to a quantized value. In a case where the numerical value of the frequency error belongs to a first numerical interval in the at least two numerical intervals, the frequency error is represented by a quantized value corresponding to the first numerical interval.

For example, the possible numerical range of the frequency error is divided into eight numerical intervals, each numerical range corresponding to a three-bit quantized value, and the quantized values corresponding to the eight numerical intervals are from 000 to 111. In a case where the numerical value of the frequency error belongs to a seventh numerical interval in the at least two numerical intervals, the frequency error is represented by the quantized value 110 corresponding to the seventh numerical interval.

In some embodiments, the first device 1001 receives first feedback signaling, wherein the first feedback signaling carries the frequency error information.

In some embodiments, the first device 1001 receives the frequency error information from the second device 1002.

**In process 1030,** the first device 1001 adjusts the frequency of its own oscillator based on the frequency error information.

In some embodiments, the frequency of the oscillator may be understood as a clock frequency or another frequency.

In some embodiments, in a case where the frequency of the oscillator differs from the channel frequency of channel 10 by 125 kHz, i.e., the frequency error is 125 kHz, the clock frequency of the oscillator is adjusted to the channel frequency of channel 10.

In summary, in the method according to the embodiments of the present disclosure, the first device transmits the first signal used for the second device to measure the frequency error of the first device, and adjusts, in response to receiving the frequency error information from the second device, the frequency of the oscillator of the first device based on the frequency error information. In this way, even if the first device adopts an oscillator with relatively poorer frequency accuracy, the frequency accuracy of the first device can still be ensured.

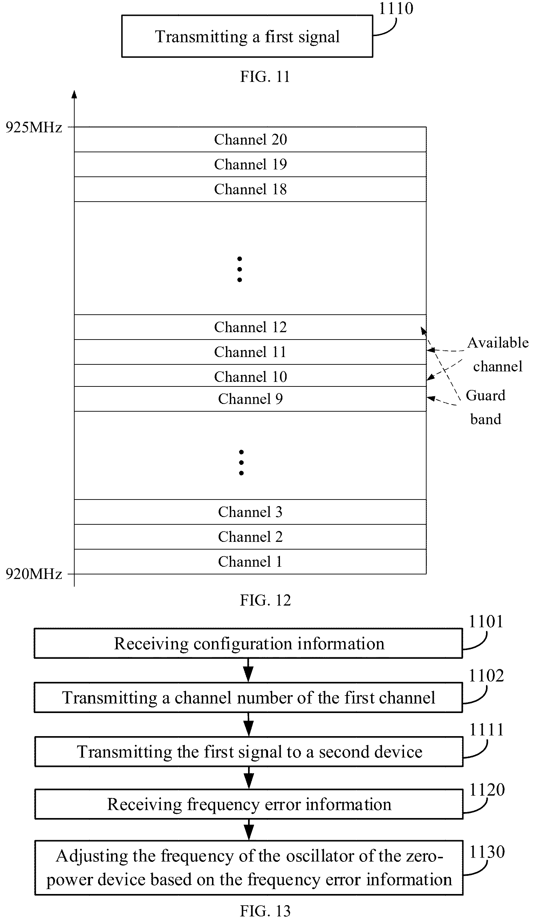

FIG. 11 illustrates a flowchart of a method for measuring frequency errors according to some embodiments of the present disclosure. The method is performed by a first device. Taking the first device being a zero-power device as an example for description, the method includes the following process.

**In process 1110,** the first device transmits a first signal.

The first signal is used for the second device to measure the frequency error of the first device. The first device is a zero-power device or an ambient IoT device. In some embodiments, the first device adopts a non-crystal oscillator or an oscillator with accuracy less than a threshold, for example, an RC oscillator or an LC oscillator.

In some embodiments, the first signal is transmitted on a first channel determined by the first device. Alternatively, the first signal is expected to be transmitted on a first channel. Alternatively, the first signal is transmitted in a transmission manner corresponding to a first channel. Because the first device has a frequency error, the first signal actually cannot be accurately transmitted on the first channel.

In some embodiments, the frequency error is a difference between a first frequency and a second frequency. The first frequency is determined based on an actual transmit frequency of the first signal or an actual transmit frequency range of the first signal, and the second frequency is determined based on a reference point frequency or a channel frequency range of the first channel. Due to the frequency error, the first channel determined by the first device deviates from the actual first channel and the first channel determined by the first device is not the actual first channel.

In some embodiments, the first frequency is an actual transmit frequency of the first signal, a frequency corresponding to an edge frequency point in the actual transmit frequency range, a frequency corresponding to a center frequency point in the actual transmit frequency range, or a frequency corresponding to another frequency point in the actual transmit frequency range.

In some embodiments, the second frequency is a channel frequency of the first channel, a frequency corresponding to an edge frequency point of the first channel, a frequency corresponding to a center frequency point of the first channel, or a frequency corresponding to another frequency point of the first channel.

In some embodiments, the first signal is referred to as a frequency calibration reference signal. As illustrated in FIG. 9, taking an example where the frequency calibration reference signal is an expected signal 910, the expected signal 910 is transmitted on channel n, and the frequency error is the difference between the actual transmit frequency of the expected signal 910 and the channel frequency of channel n.

In some embodiments, the first channel is specified in a communication protocol or configured by a network device.

In a frequency band of 920 MHz to 925 MHz, based on the RFID frequency specifications in a relevant region, 20 channels are allocated within the 5 MHz frequency band, with the bandwidth of each channel being 250 kHz.

It may be specified in the communication protocol that the first channel is used for transmission of the first signal. For example, it is specified that channel 10 is used for transmission of the first signal. Alternatively, the network device configures the first channel over signaling, wherein the signaling is carried in a beacon frame channel (applicable to a WLAN system), in system broadcast information, in RRC signaling, or in media access control (MAC) signaling (applicable to a cellular communication system).

In some embodiments, the first channel is a channel in a first channel set, wherein the first channel set is specified in a communication protocol or configured by a network device.

In some embodiments, the first channel is selected from channels other than two edge channels in the first channel set. As illustrated in FIG. 12, the first channel set includes channel 9, channel 10, channel 11, and channel 12, wherein channel 9 and channel 12 are two edge channels, respectively.

For example, channel 10 and channel 11 are available channels. The first channel is selected from channel 10 and channel 11, and channel 9 and channel 12 serve as guard bands to avoid interference with signals on adjacent channels. Due to the frequency error of the transmitted signal, even if the first signal is selected to be transmitted on channel 10, the actually transmitted first signal may be on channel 9 or channel 11. The same applies if the first signal is selected to be transmitted on channel 11. Therefore, in a case where two edge channels serve as guard bands, even if the first signal is offset, signals on other channels will not be affected.

In some embodiments, the first channel is selected from channels other than N edge channels in the first channel set, wherein N is a natural number and N is less than the total number of channels.

In some embodiments, the first channel is randomly selected from the first channel set. In a case where no guard band is present, the first channel may be selected from a broader range.

In summary, in the method according to the embodiments of the present disclosure, by transmitting the first signal used for the second device to measure the frequency error of the first device, the frequency error between the actual transmit frequency and the expected transmit frequency of the first signal is measured, and the frequency error can be used to adjust the zero-power device, thereby ensuring the frequency accuracy of the zero-power device.

In the method according to the embodiments of the present disclosure, the edge channels are set as guard bands, and the first channel is selected from channels other than the edge channels, which reduces the influence on signals on other channels in a case where the actual transmit frequency of the first signal is offset.

FIG. 13 illustrates a flowchart of a method for measuring frequency errors according to some embodiments of the present disclosure. The method is performed by a first device. Taking the first device being a zero-power device as an example for description, the method includes the following processes.

**In process 1101,** the first device receives configuration information.

In some embodiments, the network device transmits configuration information, wherein the configuration information is used for configuring a first channel set.

In some embodiments, the first channel is a channel in the first channel set, wherein the first channel set is specified in a communication protocol or configured by a network device.

In some embodiments, the first device receives the configuration information, wherein configuration information is used for configuring the first channel set, and the first device determines the first channel from the first channel set.

For details of the first channel set, reference may be made to process 1110 in the embodiment illustrated in FIG. 11, which is not elaborated herein any further.

**In process 1102,** the first device transmits a channel number of the first channel.

In some embodiments, in a case where a plurality of channels are available for transmission of the first signal, the zero-power device needs to transmit a channel number of a selected channel. Taking an example where the first channel is selected for transmission of the first channel, the zero-power device transmits the channel number of the first channel. The network device calculates the frequency error based on the actual transmit frequency of the first signal and the channel frequency of the first channel.

As illustrated in FIG. 12, in a case where channel 10 is the first channel, the actual transmit frequency of the first signal is 922.5 MHz, the channel frequency of channel 10 is 920 + 0.125+ 0.25 * 9 = 922.375 MHz, then the frequency error calculated by the network device is 922.5 MHz - 922.375 MHz = 0.125 MHz = 125 kHz.

In some embodiments, the zero-power device transmits the channel number of the first channel simultaneously when transmitting the first signal.

In some embodiments, process 1101 is an optional process, and in this case, the network device does not configure the first channel set, and the first device selects any channel within the frequency band as the first channel and transmits the channel number of the first channel simultaneously when transmitting the first signal.

In some embodiments, the first device transmits the first signal and the channel number of the first channel simultaneously. In some embodiments, the first signal and the channel number of the first channel are carried in the same message, and the first signal is prior to the channel number of the first channel in this message, or the channel number of the first channel is prior to the first signal in this message.

**In process 1111,** the first device transmits the first signal to a second device.

The second device is a device in a Wi-Fi/WLAN system or a device in a mobile communication system (also referred to as a cellular communication system). The following description is given taking an example where the second device is a network device.

In some embodiments, the first signal is transmitted at an instant when an idle channel is monitored. That is, the zero-power device transmits the first signal at any instant of monitoring an idle channel.

In some embodiments, the first signal is transmitted within a periodic time window.

The parameter of the periodic time window is specified in a communication protocol or configured by a network device; or the parameter of the periodic time window is associated with the first channel.

The parameter of the periodic time window includes at least one of a period, a duration, or a start position of the period.

In some embodiments, the parameter of the periodic time window is associated with a specific channel. For example, the period of the periodic time window is consistent with a channel period of a beacon frame, and a time offset is present between the start position of the period and a start position of a beacon frame channel, wherein the time offset is predefined by persons skilled in the art or configured by a network device.

In some embodiments, the parameter of the periodic time window is transmitted from the network device to the zero-power device in advance, for example, over a beacon frame channel (applicable to a WLAN system), system broadcast information, RRC signaling, or MAC signaling (applicable to a cellular communication system).

In some embodiments, the first signal is transmitted in response to receiving the first signaling.

In some embodiments, the first signaling is used to indicate a time window for the first device to transmit the first signal. In some embodiments, the method is applied to an unlicensed spectrum, and the network device preempts a channel. Upon preemption of the channel, the network device shares, by transmitting the first signaling, the channel with the zero-power device for transmission of the first signal. The advantage of this approach is that the zero-power device does not need to monitor a channel by itself prior to transmitting the first signal, and instead the network device monitors the channel. The network device informs the zero-power device to transmit the first signal by transmitting first signaling, and/or the network device informs the zero-power device of the duration of the preempted channel, during which the zero-power device may transmit the first signal.

In some embodiments, the first signal is a signal containing a specific sequence. The network device receives, by detecting the specific sequence, the first signal corresponding to the specific sequence.

In some embodiments, the first signal is transmitted prior to transmission of an association request (frame).

In a Wi-Fi/WLAN system, prior to attempting to establish an association with the network device, i.e., prior to transmitting an association request (frame), the zero-power device transmits the first signal to the network device and acquires frequency error information, such that the zero-power device adjusts its own operating frequency prior to transmitting the association request (frame).

In a Wi-Fi/WLAN system, the network device configures a time window for the zero-power device, wherein the time window is used for transmission of the first signal. Alternatively, the network device preempts a channel, and upon preemption of the channel, the network device shares, by transmitting the first signaling, the channel with the zero-power device for transmission of the first signal. Alternatively, the zero-power device monitors a channel, and transmits the first signal over an idle channel.

In some embodiments, the first signal is transmitted prior to transmission of a random access preamble (code).

In a 3GPP system, prior to transmitting a random access preamble (code) to the network device, the zero-power device transmits the first signal to the network device.

In a 3GPP system, the network device configures a time window for the zero-power device, wherein the time window is used for transmission of the first signal.

In some embodiments, the first signal is transmitted together with an association request (frame), and the frequency error information is carried in an association response.

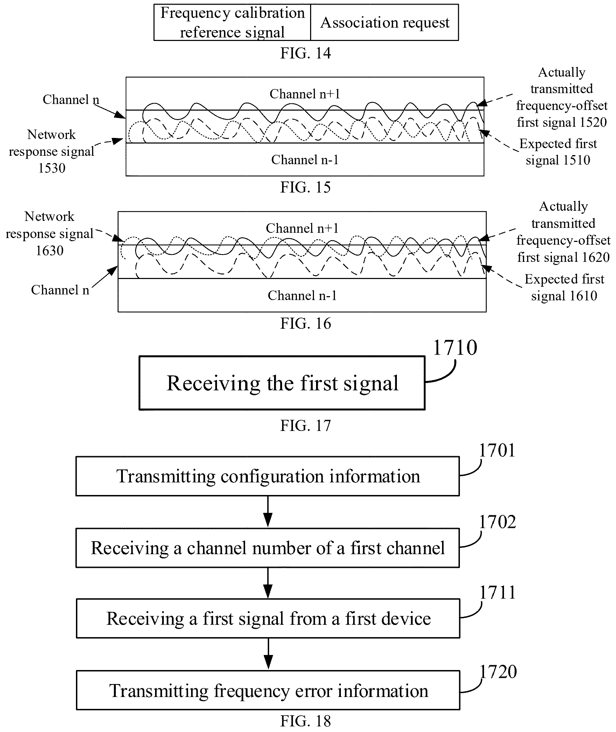

In a Wi-Fi/WLAN system, the first signal is transmitted together with an association request (frame), and the first signal is prior to or subsequent to the association request (frame). As illustrated in FIG. 14, the frequency calibration reference signal (first signal) is prior to the association request (frame). An association response (frame) transmitted by the network device carries the frequency error information.

In some embodiments, the first signal is transmitted together with a random access preamble (code), and the frequency error information is carried in a random access response.

In a 3GPP system, the first signal is transmitted together with a random access request signal, and the first signal is prior to or subsequent to the random access request signal. A random access response transmitted by the network device carries the frequency error.

In some embodiments, the first signal is transmitted prior to transmission of a probe request; or the first signal is transmitted together with a probe request; or the first signal is transmitted prior to transmission of uplink data; or the first signal is transmitted prior to reception of downlink data.

In a Wi-Fi/WLAN system, the first signal is transmitted prior to transmission of a probe request by the zero-power device (when the zero-power device performs an active scanning process), or the first signal is transmitted together with the probe request, which is similar to the above association request and is not elaborated herein any further.

In a Wi-Fi/WLAN system, in a case where the zero-power device has established an association with the network device, if the zero-power device does not adjust its own frequency for a long period of time prior to transmitting uplink data or receiving downlink data, an excessive frequency offset may occur due to frequency drift. The frequency drift refers to a slow change in an output frequency value of the zero-power device over time when the zero-power device operates continuously for a long period of time. Therefore, the first signal may be transmitted prior to the transmission of the uplink data or the reception of the downlink data. Since the zero-power device has established an association with the network device, the network device has acquired an association identifier (ID), and the network device transmits the association ID simultaneously when transmitting the frequency error.

In a 3GPP system, in a case where the zero-power device has established an association (e.g., RRC connection) with the network device, the zero-power device transmits the first signal prior to transmission of uplink data or reception of downlink data. The network device transmits a radio network temporary identity (RNTI) allocated for the zero-power device simultaneously when transmitting the frequency error.

**In process 1120,** the first device receives frequency error information.

Three possible implementations for the frequency-domain position of the frequency error information are present. In different embodiments, any one of the three possible implementations may be used.

**In a first implementation, the frequency error information is received over a first channel.**

In some embodiments, the frequency error information is received over a first channel. Similar to transmission of the first signal in process 1110, the network device determines the first channel, wherein the first channel is specified in a communication protocol or configured by a network device, or the network device determines the first channel by interpreting the first signal, and the network device responds with the frequency error information over the first channel. The zero-power device receives the frequency error information over the first channel.

In some embodiments, no offset is present between the actual transmit frequency of the frequency error information and a second frequency, wherein the second frequency is determined based on the reference point frequency or the channel frequency range of the first channel. Since the clock precision of the network device is higher, an offset may not be present between the actual transmit frequency of the frequency error information and the second frequency.

In some embodiments, the actual transmit frequency of the frequency error information is offset from the second frequency, and the second frequency is determined based on the reference point frequency or the channel frequency range of the first channel. Since a slight deviation may be present in the clock precision of the network device, the actual transmit frequency of the frequency error information may be slightly offset from the second frequency, but such an offset is less than or far less than the frequency error of the zero-power device.

In this case, the receive frequency range of the zero-power device should be appropriately increased. As illustrated in FIG. 15, an expected first signal 1510 is on channel n, however, the actually transmitted frequency-offset first signal 1520 deviates towards channel n+1 due to the frequency error. A network response signal 1530 used for responding with frequency error information is also on channel n. The zero-power device needs to take into account the frequency error when receiving the frequency error information, so as to receive the network response signal 1530 within a frequency receiving range as large as possible. For example, the zero-power device receives signals on channel n-1, channel n, and channel n+1 to ensure reception of the network response signal 1530. For another example, the zero-power device receives signals on channel n-1, channel n, channel n+1, and channel n+2 to ensure reception of the network response signal 1530. The number of channels is not limited in the embodiments of the present disclosure. Channel n may be expanded by 10% on both sides, and the network response signal 1530 is received on the expanded channel n.

**In a second implementation, the frequency error information is received at the same frequency as the first signal.**

In some embodiments, the actual transmit frequency of the frequency error information is the same as the actual transmit frequency of the first signal. The network device has already acquired the actual transmit frequency of the first signal prior to transmitting the frequency error information, and therefore, the network device may transmit the frequency error information at the same frequency. This method simplifies reception of the frequency error information by the zero-power device, in which the zero-power device only needs to receive the frequency error information at the actual transmit frequency position of the first signal.

As illustrated in FIG. 16, an expected first signal 1610 is on channel n, and the actually transmitted frequency-offset first signal 1620 deviates towards channel n+1. In this case, the transmit frequency of the network response signal 1630 used for responding with the frequency error information is the same as the transmit frequency of the actually transmitted frequency-offset first signal 1620, that is, the network response signal 1630 also deviates towards channel n+1.

**In a third implementation, the frequency error information is received over a second channel.**

In some embodiments, the frequency error information is received over a second channel. The second channel is specified in a communication protocol or configured by a network device, and the second channel is the same as or different from the first channel.

In some embodiments, the frequency error information is carried over first feedback signaling.

In some embodiments, the transmission bit rate of the frequency error information is less than a threshold.

The zero-power device may still be in a state where the frequency is unstable when the zero-power device receives the frequency error information. For example, in the case where the zero-power device receives the frequency error information over the first channel as described above, the transmit frequency of the frequency error information estimated by the zero-power device may be offset from the actual transmit frequency of the frequency error information. In order to ensure the receiving performance of the zero-power device, the transmission bit rate of the frequency error (information) is less than a threshold. In a case where the transmission bit rate is lower, the probability of a successful response with the frequency error information is higher. The threshold is specified in a communication protocol or set by persons skilled in the art, which is not limited in the embodiments of the present disclosure.

**In process 1130,** the first device adjusts the frequency of the oscillator of the zero-power device based on the frequency error information.

In some embodiments, the zero-power device receives the frequency error information from the network device, and adjusts the frequency (e.g., clock frequency) of the oscillator of the zero-power device itself based on the frequency error information.

As illustrated in FIG. 12, since the actual transmit frequency of the first signal is not the channel frequency of channel 10, a frequency error is present between the actual transmit frequency of the first signal and the channel frequency of the fixed channel 10, and in order to remedy the frequency error, the clock frequency of the oscillator needs to be adjusted. In a case where the frequency error between the actual transmit frequency of the first signal and the channel frequency of channel 10 is 125 kHz, i.e., the frequency error is 125 kHz, the clock frequency of the oscillator is adjusted by compensating for 125 kHz.

In some embodiments, processes 1101 and 1102 are optional, and in different embodiments, either or both of processes 1101 and 1102 may be omitted or replaced, for example, process 1101 is omitted. The first channel set is predefined.

Processes 1111, 1120, and 1130 may be implemented as independent embodiments, and processes 1102, 1111, 1120, and 1130 may be implemented as independent embodiments, which is not limited.

Processes 1111, 1120, and 1130 may be implemented as independent embodiments. In this implementation, even if the first device adopts an oscillator with relatively poorer frequency accuracy, the frequency accuracy of the first device can still be ensured.

Process 1111 is implemented as an independent embodiment, for example, as a method for transmitting signals.

Process 1120 is implemented as an independent embodiment, for example, as a method for receiving information.

Process 1130 is implemented as an independent embodiment, for example, as a method for adjusting frequencies.

In summary, in the method according to the embodiments of the present disclosure, the first device transmits the first signal used for the second device to measure the frequency error of the first device, and adjusts, in response to receiving the frequency error information from the second device, the frequency of the oscillator of the first device based on the frequency error information. In this way, even if the first device adopts an oscillator with relatively poorer frequency accuracy, the frequency accuracy of the first device can still be ensured.

In the method according to the embodiments of the present disclosure, the first signal is transmitted at any time position, within a periodical time window, or at a time position of a trigger event, which satisfies multiple needs in IoT application scenarios.

In the method according to the embodiments of the present disclosure, the first signal is transmitted prior to or together with any other signals, which satisfies multiple needs in IoT application scenarios.

In the method according to the embodiments of the present disclosure, the frequency error information is transmitted on the actual transmit frequency of the first signal, which reduces the complexity of receiving the frequency error information by the first device.

FIG. 17 illustrates a flowchart of a method for measuring frequency errors according to some embodiments of the present disclosure. The method is performed by a second device, wherein the second device is a device in a Wi-Fi/WLAN system or a device in a mobile communication system (also referred to as a cellular communication system). The following description is given taking an example where the second device is a network device. The method includes the following processes.

**In process 1710,** the second device receives a first signal.

In some embodiments, the first signal is used for the second device to measure a frequency error of a first device. The first device is a zero-power device or an ambient IoT device. In some embodiments, the first device 1001 adopts a non-crystal oscillator or an oscillator with accuracy less than a threshold, for example, an RC oscillator or an LC oscillator.

In some embodiments, the first signal is transmitted on a first channel determined by the first device. Alternatively, the first signal is expected to be transmitted on a first channel. Alternatively, the first signal is transmitted in a transmission manner corresponding to a first channel. Because the first device has a frequency error, the first signal actually cannot be accurately transmitted on the first channel.

In some embodiments, the frequency error is a difference between a first frequency and a second frequency. The first frequency is determined based on an actual transmit frequency of the first signal or an actual transmit frequency range of the first signal, and the second frequency is determined based on a reference point frequency or a channel frequency range of the first channel. Due to the frequency error, the first channel determined by the first device deviates from the actual first channel and the first channel determined by the first device is not the actual first channel.

In some embodiments, the first frequency is an actual transmit frequency of the first signal, a frequency corresponding to an edge frequency point in the actual transmit frequency range, a frequency corresponding to a center frequency point in the actual transmit frequency range, or a frequency corresponding to another frequency point in the actual transmit frequency range.

In some embodiments, the second frequency is a channel frequency of the first channel, a frequency corresponding to an edge frequency point of the first channel, a frequency corresponding to a center frequency point of the first channel, or a frequency corresponding to another frequency point of the first channel.

In some embodiments, the first channel is specified in a communication protocol or configured by a network device; or the first channel is a channel in a first channel set, wherein the first channel set is specified in a communication protocol or configured by a network device.

In some embodiments, the first channel is selected by the first device from channels other than two edge channels in the first channel set.

In some embodiments, the first channel is randomly selected by the first device from the first channel set.

For implementation details of the method for measuring frequencies, reference may be made to the description of the first terminal, which are not elaborated herein any further.

In summary, in the method according to the embodiments of the present disclosure, the first signal is received, and the frequency error between the actual transmit frequency of the first signal and the expected transmit frequency is measured. The frequency error is used to assist in the adjustment of the zero-power device, thereby ensuring the frequency accuracy of the zero-power device.

In the method according to the embodiments of the present disclosure, the first channel is selected from channels other than the edge channels, which reduces the influence on signals on other channels in a case where the actual transmit frequency of the first signal is offset.

FIG. 18 illustrates a flowchart of a method for measuring frequency errors according to some embodiments of the present disclosure. The method is performed by a second device, wherein the second device is a device in a Wi-Fi/WLAN system or a device in a mobile communication system (also referred to as a cellular communication system). The following description is given taking an example where the second device is a network device. Th method includes the following processes.

**In process 1701,** the second device transmits configuration information.

**In process 1702,** the second device receives a channel number of a first channel.

**In process 1711,** the second device receives a first signal from a first device.

In some embodiments, the first signal is transmitted by the first device at an instant of detecting an idle channel; or the first signal is transmitted by the first device within a periodic time window; or the first signal is transmitted by the first device in response to receiving first signaling.

In some embodiments, the parameter of the periodic time window is specified in a communication protocol or configured by a network device; or the parameter of the periodic time window is associated with the first channel.

The parameter of the periodic time window includes at least one of a period, a duration, or a start position of the period.

In some embodiments, the first signaling is transmitted to the first device, wherein the first signaling is used to indicate a time window for the first device to transmit the first signal.

Upon preemption of a channel, the second device shares the preempted channel with the first device for transmission of the first signal on the channel. The first signaling is used to indicate a time window for transmission of the first signal on the preempted channel.

In some embodiments, the first signal is transmitted by the first device prior to transmission of an association request; or the first signal is transmitted by the first device prior to transmission of a random access preamble.

In some embodiments, the first signal is transmitted by the first device together with an association request, wherein the frequency error information is carried in an association response; or the first signal is transmitted by the first device together with a random access preamble, wherein the frequency error information is carried in a random access response.

In some embodiments, the first signal is transmitted by the first device prior to transmission of a probe request; or the first signal is transmitted by the first device together with a probe request; or the first signal is transmitted by the first device prior to transmission of uplink data; or the first signal is transmitted by the first device prior to reception of downlink data.

**In process 1720,** the second device transmits frequency error information.

In some embodiments, the frequency error information is used to adjust a frequency of an oscillator of the zero-power device.

In some embodiments, the frequency error information is transmitted over a first channel; or the frequency error information is transmitted at the same frequency as the first signal.

In some embodiments, the actual transmit frequency of the frequency error information is offset from a second frequency, wherein the second frequency is determined based on a reference point frequency or channel frequency range of the first channel.

In some embodiments, the actual transmit frequency of the frequency error information is the same as the actual transmit frequency of the first signal, that is, the frequency error information is transmitted or received at the same frequency as the first signal.

In some embodiments, the frequency error information is received over a second channel, wherein the second channel is specified in a communication protocol or configured by a network device.

In some embodiments, the transmission bit rate of the frequency error is less than a threshold.

For implementation details of the method for measuring frequencies, reference may be made to the description of the first terminal, which are not elaborated herein any further.

In some embodiments, processes 1701 and 1702 are optional, and in different embodiments, either or both of processes 1701 and 1702 may be omitted or replaced, for example, process 1701 is omitted. The first channel set is predefined.

Processes 1711 and 1720 may be implemented as independent embodiments, and processes 1702, 1711, and 1720 may be implemented as independent embodiments, which is not limited.

Processes 1711 and 1720 may be implemented as independent embodiments. In this implementation, even if the first device adopts an oscillator with relatively poorer frequency accuracy, the frequency accuracy of the first device can still be ensured.

Process 1711 is implemented as an independent embodiment, for example, as a method for receiving signals.

Process 1720 is implemented as an independent embodiment, for example, as a method for transmitting information.

In summary, in the method according to the embodiments of the present disclosure, the second device receives the first signal used for the second device to measure the frequency error of the first device, and transmits the frequency error to the first device based on the first signal. The first device adjusts the frequency of the oscillator of the first device itself based on the frequency error. In this way, even if the first device adopts an oscillator with relatively poorer frequency accuracy, the frequency accuracy of the first device can still be ensured.

In the method according to the embodiments of the present disclosure, the second preempts a channel, and shares the preempted channel with the first device, such that the first device does not need to monitor channels by itself, which reduces the burden of the first device.

In the above embodiments, processes with the same serial number may be considered as the same process. The embodiment corresponding to FIG. 10, the embodiment corresponding to FIG. 11, the embodiment corresponding to FIG. 13, the embodiment corresponding to FIG. 17, and the embodiment corresponding to FIG. 18 may be implemented independently or in combination, which is not limited in the present disclosure.

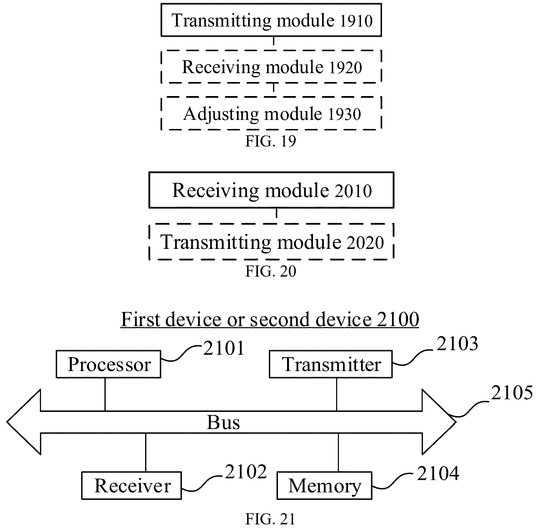

FIG. 19 illustrates a block diagram of an apparatus for measuring frequency errors according to some embodiments of the present disclosure. The apparatus is implemented as a first device or a part of the first device by software, hardware, or a combination of the two. The apparatus includes a transmitting module 1910, a receiving module 1920, and an adjusting module 1930. The functions of the transmitting module 1910 are implemented by a transmitter in the first device, the functions of the receiving module 1920 are implemented by a receiver in the first device, and the functions of the adjusting module 1930 are implemented by a processor in the first device.

The transmitting module 1910 is configured to transmit a first signal, wherein the first signal is used for a second device to measure a frequency error of the first device. The apparatus is an apparatus in a zero-power device.

The first signal is used for the second device to measure the frequency error of the apparatus for measuring frequency errors, which is a zero-power device or an ambient IoT device. In some embodiments, the apparatus for measuring frequency errors adopts a non-crystal oscillator or an oscillator with accuracy less than a threshold, for example, an RC oscillator or an LC oscillator.

In some embodiments, the first signal is transmitted on a first channel determined by the apparatus for measuring frequency errors. Alternatively, the first signal is expected to be transmitted on a first channel. Alternatively, the first signal is transmitted in a transmission manner corresponding to a first channel. Because the apparatus for measuring frequency errors has a frequency error, the first signal actually cannot be accurately transmitted on the first channel.

In some embodiments, the frequency error is a difference between a first frequency and a second frequency. The first frequency is determined based on an actual transmit frequency of the first signal or an actual transmit frequency range of the first signal, and the second frequency is determined based on a channel frequency or a channel frequency range of the first channel. Due to the frequency error, the first channel determined by the apparatus for measuring frequency errors deviates from the actual first channel and the first channel determined by the apparatus for measuring frequency errors is not the actual first channel.

In some embodiments, the first frequency is an actual transmit frequency of the first signal, a frequency corresponding to an edge frequency point in the actual transmit frequency range, a frequency corresponding to a center frequency point in the actual transmit frequency range, or a frequency corresponding to another frequency point in the actual transmit frequency range.

In some embodiments, the second frequency is a channel frequency of the first channel, a frequency corresponding to an edge frequency point of the first channel, a frequency corresponding to a center frequency point of the first channel, or a frequency corresponding to another frequency point of the first channel.

In some embodiments, the first signal is referred to as a frequency calibration reference signal.

In some embodiments, the first channel is specified in a communication protocol or configured by a network device.

In a frequency band of 920 MHz to 925 MHz, based on the RFID frequency specifications in a relevant region, 20 channels are allocated within the 5 MHz frequency band, with the bandwidth of each channel being 250 kHz.

It may be specified in the communication protocol that the first channel is used for transmission of the first signal. Alternatively, the network device configures the first channel over signaling, wherein the signaling is carried in a beacon frame channel (applicable to a WLAN system), in system broadcast information, in RRC signaling, or in MAC signaling (applicable to a cellular communication system).

In some embodiments, the first channel is a channel in a first channel set, wherein the first channel set is specified in a communication protocol or configured by a network device.

In some embodiments, the first signal is transmitted on the first channel determined by the apparatus for measuring frequency errors; the frequency error is a difference between a first frequency and a second frequency; wherein the first frequency is determined based on an actual transmit frequency of the first signal or an actual transmit frequency range of the first signal, and the second frequency is determined based on a reference point frequency or a channel frequency range of the first channel.

In some embodiments, the first channel is specified in a communication protocol or configured by a network device; or the first channel is a channel in a first channel set, wherein the first channel set is specified in a communication protocol or configured by a network device.

In some embodiments, the first channel is selected from channels other than two edge channels in the first channel set.

In some embodiments, the first channel is selected from channels other than N edge channels in the first channel set, wherein N is a natural number and N is less than the total number of channels.

In some embodiments, the first channel is randomly selected from the first channel set.

In some embodiments, the receiving module 1920 is configured to receive configuration information, and the configuration information is used for configuration of the first channel set.

In some embodiments, the transmitting module 1910 is configured to transmit a channel number of the first channel.

In some embodiments, in a case where a plurality of channels are available for transmission of the first signal, the apparatus for measuring frequency errors needs to transmit the channel number of a selected channel. Taking an example where the first channel is selected for transmission of the first signal, the apparatus for measuring frequency errors transmits the channel number of the first channel. The second device calculates a frequency error based on the actual transmit frequency of the first signal and the channel frequency of the first channel.

In some embodiments, the apparatus for measuring frequency errors transmits the channel number of the first channel simultaneously when transmitting the first channel.

In some embodiments, the first signal is transmitted at an instant of detecting in idle channel, that is, the apparatus for measuring frequency errors transmits the first signal at any instant of monitoring an idle channel; or the first signal is transmitted within a periodic time window; or the first signal is transmitted in response to receiving first signaling.

In some embodiments, the parameter of the periodic time window is specified in a communication protocol or configured by a network device; or the parameter of the periodic time window is associated with the first channel.

The parameter of the periodic time window includes at least one of a period, a duration, or a start position of the period.

In some embodiments, the parameter of the periodic time window is associated with a specific channel. For example, the period of the periodic time window is consistent with a channel period of a beacon frame, and a time offset is present between the start position of the period and a start position of a beacon frame channel, wherein the time offset is predefined by persons skilled in the art or configured by a network device.

In some embodiments, the parameter of the periodic time window is transmitted from the network device to the apparatus for measuring frequency errors in advance, for example, over a beacon frame channel (applicable to a WLAN system), system broadcast information, RRC signaling, or MAC signaling (applicable to a cellular communication system).

In some embodiments, the first signaling is used to indicate a time window for the apparatus for measuring frequency errors to transmit the first signal. In some embodiments, the network device preempts a channel, and upon preemption of the channel, the network device shares, by transmitting the first signaling, the channel with the apparatus for measuring frequency errors for transmission of the first signal. The advantage of this approach is that the apparatus for measuring frequency errors does not need to monitor a channel by itself prior to transmitting the first signal, and instead the network device monitors the channel. The network device instructs the apparatus for measuring frequency errors to transmit the first signal by transmitting first signaling, and/or the network device informs the apparatus for measuring frequency errors of the duration of the preempted channel, during which the apparatus for measuring frequency errors may transmit the first signal.

In some embodiments, the first signal is a signal containing a specific sequence. The network device receives, by detecting the specific sequence, the first signal corresponding to the specific sequence.

In some embodiments, the first signal is transmitted prior to transmission of an association request (frame).

In a Wi-Fi/WLAN system, prior to attempting to establish an association with the network device, i.e., prior to transmitting an association request (frame), the apparatus for measuring frequency errors transmits the first signal to the network device and acquires frequency error information, such that the apparatus for measuring frequency errors adjusts its own operating frequency prior to transmitting the association request (frame).

In a Wi-Fi/WLAN system, the network device configures a time window for the apparatus for measuring frequency errors, wherein the time window is used for transmission of the first signal. Alternatively, the network device preempts a channel, and upon preemption of the channel, the network device shares, by transmitting the first signaling, the channel with the apparatus for measuring frequency errors for transmission of the first signal. Alternatively, the apparatus for measuring frequency errors monitors a channel, and transmits the first signal over an idle channel.

In some embodiments, the first signal is transmitted prior to transmission of a random access preamble (code).

In a 3GPP system, prior to transmitting a random access preamble (code) to the network device, the apparatus for measuring frequency errors transmits the first signal to the network device.

In a 3GPP system, the network device configures a time window for the apparatus for measuring frequency errors, wherein the time window is used for transmission of the first signal.

In some embodiments, the first signal is transmitted together with an association request (frame), and the frequency error information is carried in an association response.

In a Wi-Fi/WLAN system, the first signal is transmitted together with an association request (frame), and the first signal is prior to or subsequent to the association request (frame).

In some embodiments, the first signal is transmitted together with a random access preamble (code), and the frequency error information is carried in a random access response.

In a 3GPP system, the first signal is transmitted together with a random access request signal, and the first signal is prior to or subsequent to the random access request signal. A random access response transmitted by the network device carries the frequency error.

In some embodiments, the first signal is transmitted prior to transmission of a probe request; or the first signal is transmitted together with a probe request; or the first signal is transmitted prior to transmission of uplink data; or the first signal is transmitted prior to reception of downlink data.

In a Wi-Fi/WLAN system, the first signal is transmitted prior to transmission of a probe request by the apparatus for measuring frequency errors (when the apparatus for measuring frequency errors performs an active scanning process), or the first signal is transmitted together with the probe request, which is similar to the above association request and not elaborated herein any further.

In a Wi-Fi/WLAN system, in a case where the apparatus for measuring frequency errors has established an association with the network device, if the apparatus for measuring frequency errors does not adjust its own frequency for a long period of time prior to transmitting uplink data or receiving downlink data, an excessive frequency offset may occur due to frequency drift. The frequency drift refers to a slow change in an output frequency value of the apparatus for measuring frequency errors over time when the apparatus for measuring frequency errors operates continuously for a long period of time. Therefore, the first signal may be transmitted prior to the transmission of the uplink data or the reception of the downlink data. Since the apparatus for measuring frequency errors has established an association with the network device, the network device has acquired an association ID, and the network device transmits the association ID simultaneously when transmitting the frequency error.

In a 3GPP system, in a case where the apparatus for measuring frequency errors has established an association (e.g., RRC connection) with the network device, the apparatus for measuring frequency errors transmits the first signal prior to transmission of uplink data or reception of downlink data. The network device transmits an RNTI allocated for the apparatus for measuring frequency errors simultaneously when transmitting the frequency error.

In some embodiments, the receiving module 1920 is configured to receive frequency error information, wherein the frequency error information is used to indicate a frequency error.

Three possible implementations for the frequency-domain position of the frequency error information are present. In different embodiments, any one of the three possible implementations may be used.

**In a first implementation, the frequency error information is received over a first channel.**

In some embodiments, the frequency error information is received over a first channel. The network device determines the first channel, wherein the first channel is specified in a communication protocol or configured by a network device, or the network device determines the first channel by interpreting the first signal, and the network device responds the frequency error information over the first channel. The apparatus for measuring frequency errors receives the frequency error information over the first channel.

In some embodiments, no offset is present between the actual transmit frequency of the frequency error information and a second frequency, wherein the second frequency is determined based on the reference point frequency or the channel frequency range of the first channel. Since the clock precision of the network device is higher, an offset may be not present between the actual transmit frequency of the frequency error information and the second frequency.

In some embodiments, the actual transmit frequency of the frequency error information is offset from the second frequency, wherein the second frequency is determined based on the reference point frequency or the channel frequency range of the first channel. Since a slight deviation may be present in the clock precision of the network device, the actual transmit frequency of the frequency error information may be slightly offset from the second frequency, but such an offset is less than or far less than the frequency error of the apparatus for measuring frequency errors.

In this case, the receive frequency range of the apparatus for measuring frequency errors should be appropriately increased. Alternatively, the channel may be expanded by 10% on both sides, and a network response signal carrying the frequency error information is received on the expanded channel.

**In a second implementation, the frequency error information is received at the same frequency as the first signal.**

In some embodiments, the actual transmit frequency of the frequency error information is the same as the actual transmit frequency of the first signal. The network device has already acquired the actual transmit frequency of the first signal prior to transmitting the frequency error information, and therefore, the network device may transmit the frequency error information at the same frequency.

**In a third implementation, the frequency error information is received over a second channel.**

In some embodiments, the frequency error information is received over a second channel. The second channel is specified in a communication protocol or configured by a network device, and the second channel is the same as or different from the first channel.

In some embodiments, the frequency error information is carried over first feedback signaling.

In some embodiments, the transmission bit rate of the frequency error information is less than a threshold.

The apparatus for measuring frequency errors may still be in a state where the frequency is unstable when the apparatus for measuring frequency errors receives the frequency error information. For example, in the case where the apparatus for measuring frequency errors receives the frequency error information over the first channel as described above, the transmit frequency of the frequency error information estimated by the apparatus for measuring frequency errors may be offset from the actual transmit frequency of the frequency error information. In order to ensure the receiving performance of the apparatus for measuring frequency errors, the transmission bit rate of the frequency error information is less than a threshold. In a case where the transmission bit rate is lower, the probability of a successful response with the frequency error information is higher. The threshold is specified in a communication protocol or set by persons skilled in the art, which is not limited in the embodiments of the present disclosure.

In some embodiments, the frequency error information is received over a first channel or received at the same frequency as the first signal.

In some embodiments, the actual transmit frequency of the frequency error information is offset from a second frequency, wherein the second frequency is determined based on a reference point frequency or channel frequency range of the first channel.

In some embodiments, the actual transmit frequency of the frequency error information is the same as the actual transmit frequency of the first signal.

In some embodiments, the frequency error information is received over a second channel, wherein the second channel is specified in a communication protocol or configured by a network device.

In some embodiments, the transmission bit rate of the frequency error information is less than a threshold.

In some embodiments, the transmitting module 1910 is configured to transmit the first signal to a second device.

In some embodiments, the second device is a device in a Wi-Fi system or a device in a cellular communication system (also referred to as a mobile communication system).

In some embodiments, the adjusting module 1930 is configured to adjust the frequency of the apparatus for measuring frequency errors based on the frequency error information.

In some embodiments, the apparatus for measuring frequency errors receives the frequency error information from the network device, and adjusts the frequency (e.g., clock frequency) of the oscillator of the apparatus for measuring frequency errors itself based on the frequency error information.

In the embodiments of the present disclosure, the transmitting module 1910 may be divided into a plurality of transmitting modules, e.g., a first transmitting module and a second transmitting module. The first transmitting module is configured to transmit the first signal, and the second transmitting module is configured to transmit the channel number of the first channel. Alternatively, the first transmitting module is configured to transmit the channel number of the first channel, and the second transmitting module is configured to transmit the first signal. The functions of different transmitting modules are not limited in the embodiments of the present disclosure.

The embodiments of the present disclosure are described by taking one transmitting module 1910 as an example, and the number of the transmitting modules 1910 is not limited.

In the embodiments of the present disclosure, the receiving module 1920 may be divided into a plurality of receiving modules, e.g., a first receiving module and a second receiving module. The first receiving module is configured to receive the frequency error information, and the second receiving module is configured to receive the configuration information. Alternatively, the first receiving module is configured to receive the configuration information, and the second receiving module is configured to receive the frequency error information. The functions of different receiving modules are not limited in the embodiments of the present disclosure.

The embodiments of the present disclosure are described by taking one receiving module 1920 as an example, and the number of the receiving modules 1920 is not limited.

For the functions of the transmitting modules 1910, reference may be made to the description of process 1110 in the embodiment illustrated in FIG. 11 and process 1102 and process 1111 in the embodiment illustrated in FIG. 13.

For the functions of the receiving module 1920, reference may be made to the description of process 1101 and process 1120 in the embodiment illustrated in FIG. 13.

For the functions of the adjusting module 1930, reference may be made to the description of process 1130 in the embodiment illustrated in FIG. 13.

FIG. 20 illustrates a block diagram of an apparatus for measuring frequency errors according to some embodiments of the present disclosure. The apparatus is implemented as a second device or a part of the second device by software, hardware, or a combination of the two. The apparatus includes a receiving module 2010 and a transmitting module 2020. The functions of the receiving module 2010 are implemented by a receiver in the second device, and the functions of the transmitting module 2020 are implemented by a transmitter in the second device.

The receiving module 2010 is configured to receive a first signal, wherein the first signal is used for the apparatus to measure a frequency error of a first device, and the first device is a zero-power device.

The first signal is used for the apparatus for measuring frequency errors to measure a frequency error of the first device. The first device is a zero-power device or an ambient IoT device. In some embodiments, the first device adopts a non-crystal oscillator or an oscillator with accuracy less than a threshold, for example, an RC oscillator or an LC oscillator.

In some embodiments, the first signal is transmitted on a first channel determined by the first device. Alternatively, the first signal is expected to be transmitted on a first channel. Alternatively, the first signal is transmitted in a transmission manner corresponding to a first channel. Because the first device has a frequency error, the first signal actually cannot be accurately transmitted on the first channel.

In some embodiments, the frequency error is a difference between a first frequency and a second frequency. The first frequency is determined based on an actual transmit frequency of the first signal or an actual transmit frequency range of the first signal, and the second frequency is determined based on a channel frequency or a channel frequency range of the first channel. Due to the frequency error, the first channel determined by the first device deviates from the actual first channel and is not the actual first channel.

In some embodiments, the first frequency is an actual transmit frequency of the first signal, a frequency corresponding to an edge frequency point in the actual transmit frequency range, a frequency corresponding to a center frequency point in the actual transmit frequency range, or a frequency corresponding to another frequency point in the actual transmit frequency range.

In some embodiments, the second frequency is a channel frequency of the first channel, a frequency corresponding to an edge frequency point of the first channel, a frequency corresponding to a center frequency point of the first channel, or a frequency corresponding to another frequency point of the first channel.

In some embodiments, the first signal is referred to as a frequency calibration reference signal.

In some embodiments, the first channel is specified in a communication protocol or configured by a network device.

In a frequency band of 920 MHz to 925 MHz, based on the RFID frequency specifications in a relevant region, 20 channels are allocated within the 5 MHz frequency band, with the bandwidth of each channel being 250 kHz.

It may be specified in the communication protocol that the first channel is used for transmission of the first signal. Alternatively, the network device configures the first channel over signaling, wherein the signaling is carried in a beacon frame channel (applicable to a WLAN system), in system broadcast information, in RRC signaling, or in MAC signaling (applicable to a cellular communication system).

In some embodiments, the first channel is a channel in a first channel set, wherein the first channel set is specified in a communication protocol or configured by a network device.

In some embodiments, the first signal is transmitted on the first channel determined by the first device; the frequency error is a difference between a first frequency and a second frequency; wherein the first frequency is determined based on an actual transmit frequency of the first signal or an actual transmit frequency range of the first signal, and the second frequency is determined based on a reference point frequency or a channel frequency range of the first channel.

In some embodiments, the first channel is specified in a communication protocol or configured by a network device; or the first channel is a channel in a first channel set, wherein the first channel set is specified in a communication protocol or configured by a network device.

In some embodiments, the first channel is selected by the first device from channels other than two edge channels in the first channel set.

In some embodiments, the first channel is selected by the first device from channels other than N edge channels in the first channel set, wherein N is a natural number and N is less than the total number of channels.

In some embodiments, the first channel is randomly selected by the first device from the first channel set.

In some embodiments, the transmitting module 2020 is configured to transmit configuration information, wherein the configuration information is used for configuration of the first channel set.

In some embodiments, the receiving module 2010 is configured to receive a channel number of the first channel.

In some embodiments, the receiving module 2010 is configured to receive the channel number of the first channel simultaneously when receiving the first signal.

In some embodiments, the first signal is transmitted by the first device at an instant of detecting in idle channel; or the first signal is transmitted by the first device within a periodic time window; or the first signal is transmitted by the first device in response to receiving first signaling.

In some embodiments, the parameter of the periodic time window is specified in a communication protocol or configured by a network device; or the parameter of the periodic time window is associated with the first channel.

The parameter of the periodic time window includes at least one of a period, a duration, or a start position of the period.

In some embodiments, the parameter of the periodic time window is associated with a specific channel. For example, the period of the periodic time window is consistent with a channel period of a beacon frame, and a time offset is present between the start position of the period and a start position of a beacon frame channel, wherein the time offset is predefined by persons skilled in the art or configured by a network device.

In some embodiments, the parameter of the periodic time window is transmitted from the apparatus for measuring frequency errors to the first device in advance, for example, over a beacon frame channel (applicable to a WLAN system), system broadcast information, RRC signaling, or MAC signaling (applicable to a cellular communication system).

In some embodiments, the transmitting module 2020 is configured to transmit first signaling to the first device, wherein the first signaling is used to indicate a time window for the first device to transmit the first signal.

In some embodiments, the apparatus for measuring frequency errors preempts a channel, and upon preemption of the channel, the apparatus for measuring frequency errors shares, by transmitting the first signaling, the channel with the first device for transmission of the first signal. The advantage of this approach is that the first device does not need to monitor a channel by itself prior to transmitting the first signal, and instead the apparatus for measuring frequency errors monitors the channel. The apparatus for measuring frequency errors informs the first device to transmit the first signal by transmitting first signaling, and/or the apparatus for measuring frequency errors informs the first device of the duration of the preempted channel, during which the first device may transmit the first signal.

In some embodiments, the first signal is a signal containing a specific sequence. The apparatus for measuring frequency errors receives, by detecting the specific sequence, the first signal corresponding to the specific sequence.

In some embodiments, the first signal is transmitted by the first device prior to transmission of an association request (frame).

In a Wi-Fi/WLAN system, prior to attempting to establish an association with the apparatus for measuring frequency errors, i.e., prior to transmitting an association request (frame), the first device transmits the first signal to the apparatus for measuring frequency errors and acquires frequency error information, such that the first device adjusts its own operating frequency prior to transmitting the association request (frame).

In a Wi-Fi/WLAN system, the apparatus for measuring frequency errors configures a time window for the zero-power device, wherein the time window is used for transmission of the first signal. Alternatively, the apparatus for measuring frequency errors preempts a channel, and upon preemption of the channel, the apparatus for measuring frequency errors shares, by transmitting the first signaling, the channel with the first device for transmission of the first signal. Alternatively, the first device monitors a channel, and transmits the first signal over an idle channel.

In some embodiments, the first signal is transmitted by the first device prior to transmission of a random access preamble (code).

In a 3GPP system, prior to transmitting a random access preamble (code) to the apparatus for measuring frequency errors, the first device transmits the first signal to the apparatus for measuring frequency errors.

In a 3GPP system, the apparatus for measuring frequency errors configures a time window for the first device, wherein the time window is used for transmission of the first signal.

In some embodiments, the first signal is transmitted by the first device together with an association request (frame), and the frequency error information is carried in an association response.

In a Wi-Fi/WLAN system, the first signal is transmitted together with an association request (frame), and the first signal is prior to or subsequent to the association request (frame).

In some embodiments, the first signal is transmitted by the first device together with a random access preamble (code), and the frequency error information is carried in a random access response.

In a 3GPP system, the first signal is transmitted together with a random access request signal, and the first signal is prior to or subsequent to the random access request signal. A random access response transmitted by the apparatus for measuring frequency errors carries the frequency error.

In some embodiments, the first signal is transmitted by the first device prior to transmission of a probe request; or the first signal is transmitted by the first device together with a probe request; or the first signal is transmitted by the first device prior to transmission of uplink data; or the first signal is transmitted by the first device prior to reception of downlink data.

In a Wi-Fi/WLAN system, the first signal is transmitted by the first device prior to transmission of a probe request (when the first device performs an active scanning process), or the first signal is transmitted together with the probe request, which is similar to the above association request and is not elaborated herein any further.

In a Wi-Fi/WLAN system, in a case where the first device has established an association with the by the first device, if the first device does not adjust its own frequency for a long period of time prior to transmitting uplink data or receiving downlink data, an excessive frequency offset may occur due to frequency drift. The frequency drift refers to a slow change in an output frequency value of the first device over time when the first device operates continuously for a long period of time. Therefore, the first signal may be transmitted prior to the transmission of the uplink data or the reception of the downlink data. Since the first device has established an association with the apparatus for measuring frequency errors, the apparatus for measuring frequency errors device has acquired an association ID, and the apparatus for measuring frequency errors transmits the association ID simultaneously when transmitting the frequency error.

In a 3GPP system, in a case where the first device has established an association (e.g., RRC connection) with the apparatus for measuring frequency errors, the first device transmits the first signal prior to transmission of uplink data or reception of downlink data. The apparatus for measuring frequency errors transmits an RNTI allocated for the first device simultaneously when transmitting the frequency error.

In some embodiments, the transmitting module 2020 is configured to transmit frequency error information, wherein the frequency error information is used to indicate a frequency error.

Three possible implementations for the frequency-domain position of the frequency error information are present. In different embodiments, any one of the three possible implementations may be used.

**In a first implementation, the frequency error information is transmitted over a first channel.**

In some embodiments, the frequency error information is transmitted over a first channel. The apparatus for measuring frequency errors determines the first channel, wherein the first channel is specified in a communication protocol or configured by a network device, or the apparatus for measuring frequency errors determines the first channel by interpreting the first signal, and the apparatus for measuring frequency errors responds with the frequency error information over the first channel. The first device receives the frequency error information over the first channel.

In some embodiments, no offset is present between the actual transmit frequency of the frequency error information and a second frequency, wherein the second frequency is determined based on the reference point frequency or the channel frequency range of the first channel. Since the clock precision of the apparatus for measuring frequency errors is higher, an offset may not be present between the actual transmit frequency of the frequency error information and the second frequency.

In some embodiments, the actual transmit frequency of the frequency error information is offset from the second frequency, wherein the second frequency is determined based on the reference point frequency or the channel frequency range of the first channel. Since a slight deviation may be present in the clock precision of the apparatus for measuring frequency errors, the actual transmit frequency of the frequency error information may be slightly offset from the second frequency, but such an offset is less than or far less than the frequency error of the first device.

**In a second implementation, the frequency error information is transmitted at the same frequency as the first signal.**

In some embodiments, the actual transmit frequency of the frequency error information is the same as the actual transmit frequency of the first signal. The apparatus for measuring frequency errors has already acquired the actual transmit frequency of the first signal prior to transmitting the frequency error information, and therefore, the apparatus for measuring frequency errors may transmit the frequency error information at the same frequency.

**In a third implementation, the frequency error information is transmitted over a second channel.**

In some embodiments, the frequency error information is received over a second channel. The second channel is specified in a communication protocol or configured by a network device, and the second channel is the same as or different from the first channel.

In some embodiments, the frequency error information is carried over first feedback signaling.

In some embodiments, the transmission bit rate of the frequency error information is less than a threshold.

The first device may still be in a state where the frequency is unstable when the first device receives the frequency error information. For example, in the case where the first device receives the frequency error information over the first channel as described above, the transmit frequency of the frequency error information estimated by the first device is offset from the actual transmit frequency of the frequency error information. In order to ensure the receiving performance of the first device, the transmission bit rate of the frequency error information is less than a threshold. In a case where the transmission bit rate is lower, the probability of a successful response with the frequency error information is higher. The threshold is specified in a communication protocol or set by persons skilled in the art, which is not limited in the embodiments of the present disclosure.

In some embodiments, the frequency error information is transmitted over a first channel or transmitted at the same frequency as the first signal.

In some embodiments, the actual transmit frequency of the frequency error information is offset from a second frequency, wherein the second frequency is determined based on a reference point frequency or channel frequency range of the first channel.

In some embodiments, the transmit frequency range of the frequency error information is offset from the first channel.

In some embodiments, the frequency error information is transmitted over a second channel, wherein the second channel is specified in a communication protocol or configured by a network device.

In some embodiments, the transmission bit rate of the frequency error information is less than a threshold.

In some embodiments, the apparatus is an apparatus in a Wi-Fi system or an apparatus in a cellular communication system (also referred to as a mobile communication system).

In the embodiments of the present disclosure, the receiving module 2010 may be divided into a plurality of receiving modules, e.g., a first receiving module and a second receiving module. The first receiving module is configured to receive the first signal, and the second receiving module is configured to receive the channel number of the first channel. Alternatively, the first receiving module is configured to receive the channel number of the first channel, and the second receiving module is configured to receive the first signal. The functions of different receiving modules are not limited in the embodiments of the present disclosure.

The embodiments of the present disclosure are described by taking one receiving module 2010 as an example, and the number of the receiving modules 2010 is not limited.

In the embodiments of the present disclosure, the transmitting module 2020 may be divided into a plurality of transmitting modules, e.g., a first transmitting module and a second transmitting module. The first transmitting module is configured to transmit the frequency error information, and the second transmitting module is configured to transmit the configuration information. Alternatively, the first transmitting module is configured to transmit the configuration information, and the second transmitting module is configured to transmit the frequency error information. The functions of different transmitting modules are not limited in the embodiments of the present disclosure.

The embodiments of the present disclosure are described by taking one transmitting module 2020 as an example, and the number of the transmitting modules 2020 is not limited.

For the functions of the receiving modules 2010, reference may be made to the description of process 1710 in the embodiment illustrated in FIG. 17 and process 1702 and process 1711 in the embodiment illustrated in FIG. 18.

For the functions of the transmitting module 2020, reference may be made to the description of process 1701 and process 1720 in the embodiment illustrated in FIG. 18.

FIG. 21 illustrates a schematic structural diagram of a first device or a second device 2100 according to some embodiments of the present disclosure. The first device or second device 2100 includes a processor 2101, a receiver 2102, a transmitter 2103, a memory 2104, and a bus 2105.

The processor 2101 includes one or more processing cores, and achieves various functional applications and information processing by running software programs and modules. In some embodiments, the processor 2101 is configured to implement the functions and processes of the adjusting module 1930 as described above.

The receiver 2102 and the transmitter 2103 may be implemented as a wireless communication assembly. The wireless communication assembly may be a wireless communication chip and may be referred to as a transceiver. The receiver 2102 is configured to implement the functions and processes of the receiving module 1920 and the receiving module 2010 as described above, and the transmitter 2103 is configured to implement the functions and processes of the transmitting module 1910 and the transmitting module 2020 as described above.

The memory 2104 is communicably connected to the processor 2101 over the bus 2105.

The memory 2104 is configured to store at least one instruction, and the processor 2101 is configured to run the at least one instruction to perform the processes in the above method embodiments.

In addition, the memory 2104 is practiced by any type of volatile or non-volatile storage device or combinations thereof. The volatile or non-volatile storage device includes but is not limited to a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable ROM (PROM).

In some embodiments, the receiver 2102 receives signals or data independently, or the processor 2101 controls the receiver 2102 to receive signals or data, or the processor 2101 requests the receiver 2102 to receive signals or data, or the processor 2101 cooperates with the receiver 2102 to receive signals or data.

In some embodiments, the transmitter 2103 transmits signals or data independently, or the processor 2101 controls the transmitter 2103 to transmit signals or data, or the processor 2101 requests the transmitter 2103 to transmit signals or data, or the processor 2101 cooperates with the transmitter 2103 to transmit signals or data.

Some embodiments of the present disclosure further provide a computer-readable storage medium storing at least one program, wherein the at least one program, when run by a processor, causes the processor to perform the methods for measuring frequency errors in the above method embodiments described above.

Some embodiments of the present disclosure further provide a computer program product or a computer program. The computer program product includes at least one computer instruction stored in a computer-readable storage medium, wherein the at least one computer instruction, when loaded and run by a processor, causes the processor to perform the methods for measuring frequency errors in the above method embodiments described above.

Those skilled in the art should understand that all or part of the processes in the above embodiments may be completed by hardware or by relevant hardware instructed by programs. The programs are stored in a computer-readable storage medium, which may be a ROM, a magnetic disk or an optical disk.

Described above are merely optional embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for measuring frequency errors, performed by a first device, the method comprising:
transmitting a first signal, wherein the first signal is used for a second device to measure a frequency error of the first device; wherein the first device is a zero-power device.

2. The method according to claim 1, further comprising:
receiving frequency error information, wherein the frequency error information is used to indicate the frequency error.

3. The method according to claim 2, further comprising:
adjusting a frequency of an oscillator of the zero-power device based on the frequency error information.

4. The method according to any one of claims 1 to 3, wherein
the first signal is transmitted over a first channel determined by the first device; and
the frequency error is a difference between a first frequency and a second frequency;
wherein the first frequency is determined based on an actual transmit frequency of the first signal or an actual transmit frequency range of the first signal, and the second frequency is determined based on a reference point frequency or a channel frequency range of the first channel.

5. The method according to claim 4, wherein
the first channel is specified in a communication protocol or configured by a network device; or
the first channel is a channel in a first channel set, wherein the first channel set is specified in a communication protocol or configured by a network device.

6. The method according to claim 5, wherein the first channel is selected from channels other than two edge channels in the first channel set.

7. The method according to claim 5, wherein the first channel is randomly selected from the first channel set.

8. The method according to claim 6 or 7, further comprising:
transmitting a channel number of the first channel.

9. The method according to any one of claims 1 to 8, wherein
the first signal is transmitted at an instant of detecting an idle channel; or
the first signal is transmitted within a periodic time window; or
the first signal is transmitted in response to receiving first signaling.

10. The method according to claim 9, wherein
a parameter of the periodic time window is specified in a communication protocol or configured by a network device; or
a parameter of the periodic time window is associated with a first channel;
wherein the parameter of the periodic time window comprises at least one of a period, a duration, or a start position of the period.

11. The method according to claim 9, wherein the first signaling is used to indicate a time window for the first device to transmit the first signal.

12. The method according to any one of claims 1 to 11, wherein
the first signal is transmitted prior to transmission of an association request; or
the first signal is transmitted prior to transmission of a random access preamble.

13. The method according to any one of claims 2 to 11, wherein
the first signal is transmitted together with an association request, wherein the frequency error information is carried in an association response; or
the first signal is transmitted together with a random access preamble, wherein the frequency error information is carried in a random access response.

14. The method according to any one of claims 1 to 11, wherein
the first signal is transmitted prior to transmission of a probe request; or
the first signal is transmitted together with a probe request; or
the first signal is transmitted prior to transmission of uplink data; or
the first signal is transmitted prior to reception of downlink data.

15. The method according to claim 2, wherein
the frequency error information is received over a first channel; or
the frequency error information is received at a same frequency as the first signal.

16. The method according to claim 15, wherein an actual transmit frequency of the frequency error information is offset from a second frequency, wherein the second frequency is determined based on a reference point frequency or channel frequency range of the first channel.

17. The method according to claim 2, wherein the frequency error information is received over a second channel, wherein the second channel is specified in a communication protocol or configured by a network device.

18. The method according to any one of claims 1 to 17, wherein a transmission bit rate of the frequency error information is less than a threshold.

19. The method according to any one of claims 1 to 18, wherein transmitting the first signal comprises:
transmitting the first signal to the second device;
wherein the second device a device in a wireless fidelity (Wi-Fi) system or a device in a cellular communication system.

20. A method for measuring frequency errors, performed by a second device, the method comprising:
receiving a first signal, wherein the first signal is used for the second device to measure a frequency error of a first device; wherein the first device is a zero-power device.

21. The method according to claim 20, further comprising:
transmitting frequency error information, wherein the frequency error information is used to indicate the frequency error.

22. The method according to claim 20 or 21, wherein the first signal is transmitted over a first channel determined by the first device;
the frequency error is a difference between a first frequency and a second frequency; wherein the first frequency is determined based on an actual transmit frequency of the first signal or an actual transmit frequency range of the first signal, and the second frequency is determined based on a reference point frequency or a channel frequency range of the first channel.

23. The method according to claim 22, wherein the first channel is specified in a communication protocol or configured by a network device; or
the first channel is a channel in a first channel set, wherein the first channel set is specified in a communication protocol or configured by a network device.

24. The method according to claim 23, wherein the first channel is selected by the first device from channels other than two edge channels in the first channel set.

25. The method according to claim 23, wherein the first channel is randomly selected by the first device from the first channel set.

26. The method according to claim 24 or 25, further comprising:
receiving a channel number of the first channel.

27. The method according to any one of claims 20 to 26, wherein
the first signal is transmitted by the first device at an instant of detecting an idle channel; or
the first signal is transmitted by the first device within a periodic time window; or
the first signal is transmitted by the first device in response to receiving first signaling.

28. The method according to claim 27, wherein a parameter of the periodic time window is specified in a communication protocol or configured by a network device; or
a parameter of the periodic time window is associated with a first channel;
wherein the parameter of the periodic time window comprises at least one of a period, a duration, or a start position of the period.

29. The method according to claim 27, further comprising:
transmitting the first signaling to the first device, wherein the first signaling is used to indicate a time window for the first device to transmit the first signal.

30. The method according to any one of claims 20 to 29, wherein the first signal is transmitted by the first device prior to transmission of an association request; or
the first signal is transmitted by the first device prior to transmission of a random access preamble.

31. The method according to any one of claims 21 to 29, wherein the first signal is transmitted by the first device together with an association request, wherein the frequency error information is carried in an association response; or
the first signal is transmitted by the first device together with a random access preamble, wherein the frequency error information is carried in a random access response.

32. The method according to any one of claims 20 to 29, wherein
the first signal is transmitted by the first device prior to transmission of a probe request; or
the first signal is transmitted by the first device together with a probe request; or
the first signal is transmitted by the first device prior to transmission of uplink data; or
the first signal is transmitted by the first device prior to reception of downlink data.

33. The method according to claim 21, wherein the frequency error information is transmitted over a first channel; or
the frequency error information is transmitted at a same frequency as the first signal.

34. The method according to claim 33, wherein an actual transmit frequency of the frequency error information is offset from a second frequency, wherein the second frequency is determined based on a reference point frequency or a channel frequency range of the first channel.

35. The method according to claim 21, wherein the frequency error information is transmitted over a second channel, wherein the second channel is specified in a communication protocol or configured by a network device.

36. The method according to any one of claims 20 to 35, wherein a transmission bit rate of the frequency error information is less than a threshold.

37. The method according to any one of claims 20 to 36, wherein the second device a device in a wireless fidelity (Wi-Fi) system or a device in a cellular communication system

38. An apparatus for measuring frequency errors, comprising:
a transmitting module, configured to transmit a first signal, wherein the first signal is used for a second device to measure a frequency error of a first device, and the apparatus is an apparatus in a zero-power device.

39. An apparatus for measuring frequency errors, comprising:
a receiving module, configured to receive a first signal, wherein the first signal is used for the apparatus to measure a frequency error of a first device, and the first device is a zero-power device.

40. A first device, comprising:
a processor;
a transceiver communicably connected to the processor; and
a memory configured to store at least one instruction executable by the processor;
wherein the processor is configured to load and run the at least one instruction to perform the method for measuring frequency errors as defined in any one of claims 1 to 19.

41. A second device, comprising:
a processor;
a transceiver communicably connected to the processor; and
a memory configured to store at least one instruction executable by the processor;
wherein the processor is configured to load and run the at least one instruction to perform the method for measuring frequency errors as defined in any one of claims 20 to 37.

42. A computer-readable storage medium, storing at least one program, wherein the at least one program is loaded and run by a processor to perform the method for measuring frequency errors as defined in any one of claims 1 to 37.

43. A computer program product, comprising at least one computer instruction stored in a computer-readable storage medium, wherein the at least one computer instruction, when loaded and run by a processor, causes the processor to perform the method for measuring frequency errors as defined in any one of claims 1 to 37.
